# EUROPÄISCHE PATENTANMELDUNG

(11) **EP 4 202 735 A1**
(43) Veröffentlichungstag der Anmeldung: **28.06.2023**
(21) Anmeldenummer: 21216897.5
(22) Anmeldetag: 22.12.2021
(51) Int. Cl.: G06F 21/31, G07C 1/10, G06Q 10/06, G06F 3/01, G06F 3/16, G07C 9/25, G07C 9/37

(54) **ANWESENHEITSERFASSUNGS-TERMINAL**

(71) Anmelder: dormakaba EAD GmbH, 78056 Villingen-Schwenningen (DE)
(72) Erfinder: Meiss, Elmar, 78056 Villingen-Schwenningen (DE); Finkbeiner, Florian, 78056 Villingen-Schwenningen (DE)
(74) Vertreter: Balder IP Law, S.L.

(57) **Zusammenfassung**

Die Erfindung betrifft ein Anwesenheitserfassungs-Terminal (10), insbesondere Zeiterfassungs-Terminal, zur Erfassung einer Anwesenheitsinformation einer Person (40) auf Basis einer Aktion der Person (40), umfassend: eine Steuereinheit (11), eine Speicherverwaltungseinheit (20), wobei die Speicherverwaltungseinheit (20) zum Verarbeiten und Speichern der Anwesenheitsinformation der Person (40) eingerichtet ist, wenigstens eine Sensoreinheit (12), wobei die Sensoreinheit (12) zur Beobachtung einer Umgebungszone (30) und zur Ausgabe einer aus der Beobachtung der Umgebungszone (30) detektierten Prasenzinformation der Person (40) eingerichtet ist, eine identification engine (111), wobei die identification engine (111) zur Identifizierung der Person (40) und zur Ausgabe einer Identifizierungsinformation eingerichtet ist, wobei die Identifizierung der Person (40) auf Basis der detektierten Prasenzinformation der Person (40) und/oder auf Basis zumindest einer weiteren personenbezogenen Information erfolgen kann, eine interaction detection engine (115), wobei die interaction detection engine (115) zum Empfangen einer eine Absicht einer Interaktion der Person (40) mit dem Anwesenheitserfassungs-Terminal (10) reprasentierenden Absichtsinformation eingerichtet ist, eine Wakeup engine (116), wobei die Wakeup engine (116) zum Aktivieren der interaction detection engine (115) zum Ermöglichen der Interaktion der Person (40) mit dem Anwesenheitserfassungs-Terminal (10) eingerichtet ist.

## Beschreibung

Die vorliegende Erfindung betrifft ein Anwesenheitserfassungs-Terminal zur Erfassung einer Anwesenheitsinformation einer Person auf Basis einer Aktion der Person. Insbesondere betrifft die Erfindung ein Zeiterfassungs-Terminal. Weiterhin betrifft die vorliegende Erfindung ein computerimplementiertes Verfahren zum Betreiben eines entsprechenden Anwesenheitserfassungs-Terminals, insbesondere Zeiterfassungs-Terminals, zur Erfassung einer Anwesenheitsinformation einer Person auf Basis einer Aktion der Person, sowie ein entsprechendes Computerprogramm.

Anwesenheitserfassungs-Terminals sind insbesondere in der Arbeitswelt zur Erfassung der Anwesenheit eines/einer Mitarbeiters/-in weit verbreitet. Anwesenheitserfassungs-Terminals befinden sich häufig in Bürogebäuden, Fabrikhallen oder etwa auch Krankenhäusern. Mithilfe der Anwesenheitserfassungs-Terminals wird ein System bereitgestellt, was eine elektronische Erfassung und Speicherung von Mitarbeiteranwesenheiten erlaubt. Im Falle eines Zeiterfassungs-Terminals dient das Terminal auch zur Erfassung und Speicherung der absolvierten Arbeitszeiten. Allgemein wird in diesem Zusammenhang vorliegend von der Anwesenheitsinformation einer Person gesprochen, welche Person sich etwa über das Anwesenheitserfassungs-Terminal zur Arbeit einbuchen oder beispielsweise für eine Pause oder am Ende des Arbeitstags ausloggen bzw. aus dem System ausbuchen möchte.

Anwesenheitserfassungs-Terminals erlauben es zentral, etwa an einer Stelle im Eingangsbereich eines Bürogebäudes oder aber auch auf jeder Etage bzw. in jeder Abteilung eines Gebäudes/Unternehmens, einen Punkt zur Interaktion für die Personen bereitzustellen, über welchen einfach die Buchungsvorgänge realisiert werden können. Dem Arbeitgeber steht dann ein zentrales System zur Verfügung, etwa über die Speicherverwaltungseinheit des Anwesenheitserfassungs-Terminals, über welches/welche der Arbeitgeber ohne großen Aufwand die Anwesenheitsinformationen der Personen nachhalten kann.

Auch wenn über die bekannten Anwesenheitserfassungs-Terminals eine Erfassung von Anwesenheitsinformationen der Personen bereits automatisiert und im Vergleich dazu, dass jede Person ihre Anwesenheit händisch nachhält oder individuell dem Arbeitgeber übermittelt, erheblich vereinfacht ist, ist die Interaktion weiterhin verbesserungswürdig. So ist die Bedienung der Anwesenheitserfassungs-Terminals nutzerfreundlicher auszugestalten. Denn regelmäßig erfordern Anwesenheitserfassungs-Terminals, dass die interagierenden Personen bis an das häufig an einer Stelle einer Wand platzierte Anwesenheitserfassungs-Terminal herantreten und vor Ort, etwa über ein Display oder eine andere Schnittstelle in direkter Nähe zum Anwesenheitserfassungs-Terminal, Eingaben vornehmen. So ist es häufig erforderlich, dass die Person ein individuelles mobiles Zutrittsmedium, etwa eine persönliche Schlüsselkarte, ein Badge oder dergleichen, unmittelbar an das Anwesenheitserfassungs-Terminal heranhält, um eine Einbuchung oder Ausbuchung vorzunehmen. Dabei besteht häufig auch die Gefahr von Fehlbuchungen, sei es unabsichtlicher Art oder aber auch absichtlicher Art, um etwa einen Einbuchungsvorgang für einen Dritten vorzunehmen oder einzubuchen, ohne jedoch zum Arbeitsplatz zu gehen.

Vor diesem Hintergrund ist eine der vorliegenden Erfindung zugrundeliegende Aufgabe, ein Anwesenheitserfassungs-Terminal bereitzustellen, bei dem die Bedienung des Anwesenheitserfassungs-Terminals bzw. die Interaktion dieses mit Personen vereinfacht ist. Insbesondere soll die Gefahr von Fehlbuchungen, absichtlicher oder unabsichtlicher Art, reduziert werden.

Weiterhin liegt der vorliegenden Erfindung die Aufgabe zugrunde, ein entsprechendes computerimplementiertes Verfahren zum Betreiben eines Anwesenheitserfassungs-Terminals bzw. ein entsprechendes Computerprogramm bereitzustellen, um die Bedienung bzw. Interaktion zu vereinfachen, sowie die Gefahr von Fehlbuchungen zu reduzieren.

Erfindungsgemäß werden die genannten Aufgaben durch das vorschlagsgemäße Anwesenheitserfassungs-Terminal, insbesondere Zeiterfassungs-Terminal, zur Erfassung einer Anwesenheitsinformation einer Person auf Basis einer Aktion der Person, sowie durch das vorschlagsgemäße computerimplementierte Verfahren zum Betreiben eines Anwesenheitserfassungs-Terminals, sowie durch das vorschlagsgemäße Computerprogramm mit den Merkmalen der entsprechenden unabhängigen Ansprüche gelöst. Darüber hinaus sind bevorzugte Ausführungsformen den abhängigen Ansprüchen sowie der Beschreibung zu entnehmen.

Im Einzelnen ist ein Anwesenheitserfassungs-Terminal zur Erfassung einer Anwesenheitsinformation einer Person auf Basis einer Aktion der Person vorgeschlagen. Bei dem vorschlagsgemäßen Anwesenheitserfassungs-Terminal kann es sich insbesondere um ein Zeiterfassungs-Terminal handeln. Dabei umfasst das vorschlagsgemäße Anwesenheitserfassungs-Terminal:
- eine Steuereinheit,
- eine Speicherverwaltungseinheit, wobei die Speicherverwaltungseinheit zum Verarbeiten und Speichern der Anwesenheitsinformation der Person eingerichtet ist,
- wenigstens eine Sensoreinheit, wobei die Sensoreinheit zur Beobachtung einer Umgebungszone und zur Ausgabe einer aus der Beobachtung der Umgebungszone detektierten Präsenzinformation der Person eingerichtet ist,
- eine identification engine, wobei die identification engine zur Identifizierung der Person und zur Ausgabe einer Identifizierungsinformation eingerichtet ist, wobei die Identifizierung der Person auf Basis der detektierten Präsenzinformation der Person und/oder auf Basis zumindest einer weiteren personenbezogenen Information erfolgen kann,
- eine interaction detection engine, wobei die interaction detection engine zum Empfangen einer eine Absicht einer Interaktion der Person mit dem Anwesenheitserfassungs-Terminal repräsentierenden Absichtsinformation eingerichtet ist, und
- eine Wakeup engine, wobei die Wakeup engine zum Aktivieren der interaction detection engine zum Ermöglichen der Interaktion der Person mit dem Anwesenheitserfassungs-Terminal eingerichtet ist.

In Bezug auf das computerimplementierte Verfahren ist im Einzelnen ein computerimplementiertes Verfahren zum Betreiben eines Anwesenheitserfassungs-Terminals, insbesondere Zeiterfassungs-Terminal, zur Erfassung einer Anwesenheitsinformation einer Person auf Basis einer Aktion der Person vorgeschlagen, welches Verfahren zumindest die folgenden Schritte umfasst:
- Detektieren einer Präsenzinformation der Person, wobei eine detektierte Präsenzinformation mittels Beobachtens einer Umgebungszone mit wenigstens einer Sensoreinheit generiert wird,
- Identifizieren der Person durch eine identification engine, wobei eine Identifizierungsinformation auf Basis der detektierten Präsenzinformation der Person und/oder auf Basis zumindest einer weiteren personenbezogenen Information generiert wird,
- Aktivieren einer interaction detection engine zur Erfassung einer Eingabe der Person, welche Eingabe eine Absicht einer Interaktion der Person mit dem Anwesenheitserfassungs-Terminal repräsentiert,
- Verarbeiten der Eingabe der Person und gegebenenfalls Speichern einer Anwesenheitsinformation der Person in einer Speicherverwaltungseinheit.

Die im Rahmen des vorschlagsgemäßen Anwesenheitserfassungs-Terminals beschriebenen Merkmale und Vorteile sind entsprechend auf das vorschlagsgemäße computerimplementierte Verfahren zum Betreiben eines Anwesenheitserfassungs-Terminals übertragbar. Dabei kann das computerimplementierte Verfahren zum Betreiben jenes vorschlagsgemäßen und beschriebenen Anwesenheitserfassungs-Terminals eingerichtet sein. Das vorschlagsgemäße und beschriebene Anwesenheitserfassungs-Terminal wiederum ist bevorzugt zur Ausführung des vorschlagsgemäßen computerimplementierten Verfahrens zum Betreiben eines Anwesenheitserfassungs-Terminals eingerichtet. Insofern werden die das Anwesenheitserfassungs-Terminal bzw. das Verfahren zum Betreiben des Anwesenheitserfassungs-Terminals betreffenden Merkmale und spezifische Vorteile regelmäßig gemeinsam nur einfach beschrieben. Im Zusammenhang mit der Vorrichtung des Anwesenheitserfassungs-Terminals beschriebene Merkmale sind entsprechend in das computerimplementierte Verfahren betreffende Ansprüche aufnehmbar.

Ein wesentlicher Vorteil der vorliegenden Erfindung ist, dass die Voraussetzungen für eine kontaktlose Interaktion zwischen der Person und dem Anwesenheitserfassungs-Terminal zügig und automatisiert bereitgestellt werden. So kann das Anwesenheitserfassungs-Terminal über die detektierte Präsenzinformation sowie die Identifizierungsinformation bereits eine erste Analyse vornehmen, ob eine sich dem Anwesenheitserfassungs-Terminal nähernde Person eine Interaktion wünscht. Sodann wird, falls die Analyse ergibt, dass die Interaktion gewünscht ist, die interaction detection engine mithilfe der Wakeup engine aktiviert, sodass die spezifische Absicht der Interaktion der Person erfasst werden kann. Der eigentliche, bestimmungsgemäße Buchungsvorgang der Anwesenheitsinformationen kann daher hochgradig automatisiert ablaufen. Die Interaktionen zwischen Personen und Anwesenheitserfassungs-Terminal sind dabei aus der Distanz durchführbar, da die Grundlage der Erfassung die Beobachtung einer Umgebungszone mithilfe der Sensoreinheit des Anwesenheitserfassungs-Terminals ist. Ein direktes Interagieren der Person mit dem Anwesenheitserfassungs-Terminal unmittelbar vor dem Anwesenheitserfassungs-Terminal stehend kann möglich, muss aber nicht notwendig sein.

Die Steuereinheit kann als integraler Bestandteil des Anwesenheitserfassungs-Terminals ausgebildet sein oder auch separat. So kann die Steuereinheit beispielsweise auch an einem anderen Ort als innerhalb eines Gehäuses des Anwesenheitserfassungs-Terminals oder etwa online abgebildet sein und über eine Kommunikationsverbindung mit dem Anwesenheitserfassungs-Terminal kommunizieren und Vorgänge wie etwa Buchungsvorgänge steuern. Die Steuereinheit kann die unterschiedlichen engines (Einrichtungen) des Anwesenheitserfassungs-Terminals steuern bzw. kann für eine Kommunikation zwischen den engines sorgen.

Die Speicherverwaltungseinheit kann lokal vorgesehen sein und beispielsweise integrierter Bestandteil des Anwesenheitserfassungs-Terminals sein. Alternativ kann die Speicherverwaltungseinheit ebenso online in einer Cloud vorgesehen sein. Sodann kann das Anwesenheitserfassungs-Terminal etwa über die Steuereinheit eine Onlineverbindung zu der Speicherverwaltungseinheit herstellen und auf diese Weise mit der Speicherverwaltungseinheit kommunizieren.

In der Speicherverwaltungseinheit können Stammsätze von Mitarbeiterdaten gespeichert sein. Dort hinterlegte personenspezifische Daten können beispielsweise Informationen über die Arbeitszeiten der Person, die Sprache, die die Person spricht, um eine spezifische Interaktion mit dem Anwesenheitserfassungs-Terminal zu ermöglichen, oder zwecks nutzerspezifischer Interaktion auch individuelle Vorlieben oder Voraussetzungen gespeichert sein. Beispielsweise kann dort hinterlegt sein, wenn eine Sehbehinderung oder Hörbehinderung einer Person vorliegt, um eine individuell an die Bedürfnisse angepasste Interaktion zu ermöglichen.

Die wenigstens eine Sensoreinheit beobachtet die Umgebungszone in der Nähe des Anwesenheitserfassungs-Terminals, wie etwa einen Flur eines Bürogebäudes beim Anwesenheitserfassungs-Terminal oder einen Eingangsbereich eines Gebäudes oder einer Etage. Hier werden die Personen erwartet, die in Interaktion mit dem Anwesenheitserfassungs-Terminal treten. Die Sensoreinheit kann einen oder mehrere Sensoren umfassen. Es können auch verschiedene Sensoreinheiten bzw. Sensoren vorgesehen sein. Die Sensoreinheit bzw. Sensoren können als integraler Bestandteil des Anwesenheitserfassungs-Terminals etwa in seinem Gehäuse eingebunden sein oder ganz oder teilweise außerhalb des regelmäßig an bzw. in der Nähe einer Wand montierten Anwesenheitserfassungs-Terminal angeordnet sein. Dann kann vorteilhaft eine Kommunikationsverbindung zwischen der Sensoreinheit und dem Anwesenheitserfassungs-Terminal, insbesondere seiner Steuereinheit, vorgesehen sein.

Die Sensoreinheit stellt auf Grundlage der Beobachtung eine detektierten Präsenzinformation der in der Umgebungszone erfassten Person bereit. Dabei kann es sich lediglich um die Information handeln, dass eine Person anwesend ist. Oder aber es kann auch ein höherer Detailgrad der detektierten Präsenzinformation vorliegen, indem etwa ein Foto der Person als detektierte Präsenzinformation ausgegeben wird.

Die identification engine kann auch Identifikationseinrichtung genannt werden. Sie stellt eine Einrichtung dar, um die Identität einer Person, die mit dem Anwesenheitserfassungs-Terminal in Interaktion tritt, festzustellen. Die identification engine kann durch eine Software im Anwesenheitserfassungs-Terminal bzw. im Rahmen der Steuereinheit realisiert sein bzw. eine Software umfassen. Über die identification engine wird eine Identifizierungsinformation ausgegeben. Dabei kann die Identifizierungsinformation die interagierende Person eindeutig repräsentieren oder sie einer Personen-Gruppe zuordnen.

Hierzu kann die identification engine die zuvor von der Sensoreinheit bereitgestellte detektierte Präsenzinformation nutzen. So kann etwa ein von der Sensoreinheit aufgenommenes Foto durch die identification engine analysiert und einer Person zugeordnet werden. Auch im Beispiel einer Erfassung durch die Sensoreinheit etwa mittels drahtloser Kommunikation mit einem mobilen Zutrittsmedium, wie etwa einer Schlüsselkarte, einem Badge oder einem mobilen Endgerät der interagierenden Person, kann jene detektierte Präsenzinformation beispielsweise in Form der Kennung der Schlüsselkarte in der identification engine weiterverarbeitet und zur Identifizierung genutzt werden.

Alternativ oder zusätzlich kann die Identifizierung auch auf Grundlage zumindest einer weiteren personenbezogenen Information erfolgen. So ist denkbar, dass auch die identification engine über eigene Sensoren verfügt, oder aber etwa dass die Sensoreinheit zunächst eine detektierte Präsenzinformation bereitstellt, die lediglich grundsätzlich die Anwesenheit einer Person repräsentiert, und sodann von der Sensoreinheit eine weitere personenbezogene Information eingeholt wird, die der Identifizierung der Person dient.

Die weitere personenbezogene Information muss keine persönlichen Daten umfassen, sondern nur eine Eindeutigkeit der Person bzw. eindeutige Unterscheidbarkeit einer Person von anderen Personen ermöglichen.

Die interaction detection engine kann auch Interaktionserkennungseinrichtung genannt werden. Sie stellt eine Einrichtung dar, um eine Absichtsinformation über eine Interaktion einer Person mit dem Anwesenheitserfassungs-Terminal zu erfassen. Dabei kann es sich um eine grundlegende Absicht handeln, also die Information, dass eine Person mit dem Anwesenheitserfassungs-Terminal interagieren möchte, oder aber auch um den konkreten Wunsch der Interaktion an sich, also was die Person konkret am Anwesenheitserfassungs-Terminal machen bzw. welche Buchung sie vornehmen möchte. Wird lediglich die grundlegende Absicht erkannt, dann kann die konkrete mit der Interaktion bewirkte Absicht nachgelagert durch eine intent engine erfasst werden. Die intent engine wiederum kann auch Absichtserkennungseinrichtung genannt werden. Sie stellt sodann die Einrichtung dar, um die konkrete Absicht der Interaktion einer Person mit dem Anwesenheitserfassungs-Terminal festzustellen. Es kann durch die intent engine dann eine entsprechende konkrete Absichtsinformation ausgegeben werden. Die intent engine kann Teil der interaction detection engine sein. Die interaction detection engine kann zur Ausgabe der Absichtsinformation eingerichtet sein. Die intent engine kann zur Ausgabe der konkreten Absichtsinformation eingerichtet sein.

Die interaction detection engine kann durch eine Software im Anwesenheitserfassungs-Terminal bzw. in der Steuereinheit realisiert sein bzw. eine Software umfassen. Die gegebenenfalls weiterhin vorgesehene intent engine kann durch eine Software im Anwesenheitserfassungs-Terminal bzw. in der Steuereinheit realisiert sein bzw. eine Software umfassen.

Die Wakeup engine kann auch Aufweckeinrichtung genannt werden. Die Wakeup engine dient dem Aktivieren der interaction detection engine. Dadurch wird zunächst mittels der Wakeup engine die Möglichkeit geschaffen, dass die vorzugsweise kontaktlose Interaktion der Person mit dem Anwesenheitserfassungs-Terminal ermöglicht wird, indem die interaction detection engine angeschaltet bzw. in den entsprechenden Zustand zur Erfassung der Absicht der Interaktion der Person versetzt wird.

Auf diese Weise kann auch vorteilhaft Energie gespart werden, da die interaction detection engine nicht permanent arbeiten muss, um die unmittelbare Möglichkeit einer kontaktlosen Interaktion von Personen mit dem Anwesenheitserfassungs-Terminal zu jedem Zeitpunkt zu gewährleisten.

Im vorschlagsgemäßen Anwesenheitserfassungs-Terminal bzw. während des vorschlagsgemäßen computerimplementierten Verfahrens findet also grundsätzlich in einem ersten Schritt eine Detektion der Person statt, in einem zweiten Schritt eine Identifikation jener Person, woraufhin in einem dritten Schritt ein Wecken der interaction detection engine stattfindet, welche die konkrete, bevorzugt kontaktlose, Interaktion zwischen Person und Anwesenheitserfassungs-Terminal ermöglicht. In einem vierten, nachfolgenden Schritt kann dann automatisch eine entsprechende Buchung oder eben nicht stattfinden. Auf diese Weise werden Buchungsvorgänge an Anwesenheitserfassungs-Terminals automatisiert und erheblich vereinfacht. Denn Grundlage des beschriebenen Vorgangs stellen automatisch über die Sensoreinheit erfasste Daten, sowie gegebenenfalls in der Speicherverwaltungseinheit hinterlegt personenspezifische Daten dar.

Vorzugsweise kann die die Steuereinheit dazu eingerichtet ist, zumindest folgende Buchungsinformationen zu empfangen und zu verarbeiten:
- die Identifizierungsinformation von der identification engine, und
- die Absichtsinformation von der interaction detection engine und/oder die konkrete Absichtsinformation von der intent engine.

Dabei kann die Steuereinheit derart mit der Speicherverwaltungseinheit interagierend konfiguriert sein, dass, falls empfangene Buchungsinformationen mit vorgegebenen Buchungsinformationen übereinstimmen, die Anwesenheitsinformation der Person automatisch verarbeitet und gespeichert wird. Es kann besonders vorteilhaft automatisch und vom Anwesenheitserfassungs-Terminal selbständig sowohl die grundsätzlich die Person repräsentierende Identifizierungsinformation sowie eben auch die Absicht der Interaktion repräsentierende Absichtsinformation erfasst und automatisch ein Abgleich vorgenommen werden, woraufhin bei erfolgreichem Abgleich der Buchungsvorgang durchgeführt wird.

Grundsätzlich kommen verschiedene Daten bzw. Eingaben in Frage, die die Absicht der Interaktion der Person repräsentieren können und folglich der interaction detection engine oder gegebenenfalls, falls notwendig, auch der intent engine zur Verfügung gestellt werden können. So kann als Absichtsinformation beispielsweise eine bestimmt Geste der Person mit einem mobilen Zutrittsmedium (wie etwa einer Schlüsselkarte, einem Badge oder auch einem mobile Endgerät) erfasst werden. Auch eine konkrete Eingabe an einem mobilen Endgerät durch die Person oder ein Sprachsignal durch die Person kann als Absichtsinformation dienen.

Grundsätzlich ist auch möglich, dass mehr Aktionen am Anwesenheitserfassungs-Terminal vorgenommen werden können, als lediglich Einbuchungs- oder Ausbuchungsvorgänge. So kann es möglich sein, dass eine Person etwa ein auf seiner Schlüsselkarte oder seinem Badge hinterlegtes Guthaben, etwa zur Nutzung in einer Kantine, abfragen möchte. Die interaction detection engine oder ggfs. die intent engine kann dann beispielsweise auch die Uhrzeit in die Analyse einfließen lassen, welche Absicht hinter der Interaktion der Person mit dem Anwesenheitserfassungs-Terminal liegt, da etwa insbesondere zu Mittagszeiten regelmäßig das Guthaben abgefragt wird. Ebenso können vorbestimmte Arten von Bewegungen, etwa der Schlüsselkarte bzw. des Badges, durch die Person, die mit dem Anwesenheitserfassungs-Terminal interagiert, repräsentativ für eine bestimmte Absicht stehen, welche die interaction detection engine oder ggfs. die intent engine sodann erkennt. Dabei können auch Absichten einer Interaktion mit dem Anwesenheitserfassungs-Terminal existieren, welche Absichten keine eindeutige Identifizierung der Person erfordern. So kann es bei solchen Absichten ausreichend sein, die detektierte Person einer Personen-Gruppe zuzuordnen, die etwa grundsätzlich mit dem Anwesenheitserfassungs-Terminal interagieren kann bzw. darf.

Nach einer Ausführungsform ist vorgeschlagen, dass die interaction detection engine als voice detection engine (Spracherkennungseinrichtung) zur Erfassung einer Spracheingabe durch die Person und/oder als gesture detection engine (Gestenerkennungseinrichtung) zur Erfassung einer Gesteneingabe durch die Person ausgebildet ist. Auf diese Weise kann durch die Person über eine einfache Spracheingabe oder über eine vorbestimmte Geste die gewünschte Absicht an das Anwesenheitserfassungs-Terminal übermittelt werden. Die Sicherheit der Buchungsvorgänge dahingehend, dass keine Fehlbuchungen stattfinden, kann weiter erhöht werden. Die voice detection engine gesture und/oder die detection engine kann als Software ausgeführt sein oder eine Software umfassen. Die voice detection engine gesture und/oder die detection engine kann Bestandteil der intent engine sein, wenn zusätzliche bzw. als Teil der interaction detection engine eine intent engine (Absichtserkennungseinrichtung) vorgesehen ist.

Nach einer Ausführungsform ist vorgeschlagen, dass die interaction detection engine ferner dazu eingerichtet ist, der empfangenen Absichtsinformation eine Entfernungsinformation zuzuordnen. Auf diese Weise weiß das Anwesenheitserfassungs-Terminal bzw. die Steuereinheit vorteilhaft, wie weit die Person, welche Person mit dem Anwesenheitserfassungs-Terminal interagieren möchte, entfernt ist. Vorzugsweise kann die interaction detection engine derart konfiguriert sein, dass die Absichtsinformation nur ausgegeben wird, wenn die Entfernungsinformation einem vorgegebenen Wertebereich entspricht. Auf diese Weise kann die Ausgabe der Absichtsinformation bzw. dessen Verarbeitung und somit letztlich die Durchführung des Buchungsvorgangs davon abhängig gemacht werden, wie weit die entsprechende Person von dem Anwesenheitserfassungs-Terminal entfernt ist. Vorteilhaft kann die Person zur Wiederholung einer Eingabe aufgefordert werden, wenn der Schwellenwert der Entfernung, ab welchem eine Eingabe zu berücksichtigen ist, unterschritten ist. Ein Beispiel für solche Schwellenwerte und entsprechende Entfernungsinformationen kann die Lautstärke einer Sprecheingabe durch die Person sein. Es kann die Gefahr von Fehlbuchungen reduziert werden, da Personen beispielsweise zur erneuten Eingabe aufgefordert werden können, wenn Schwellenwerte der Stärke einer Eingabe, ab welchen Schwellenwerten jene Eingabe sicher erkannt werden könnte, noch nicht erreicht sind.

Nach einer Ausführungsform ist vorgeschlagen, dass ferner die Steuereinheit derart eingerichtet ist, dass, wenn die detektierte Präsenzinformation der Person einem vorgegebenen Wertebereich entspricht, eine Initiierungs-Information an die Person zur Mitteilung, dass die Interaktion möglich ist, ausgegeben wird. Auf diese Weise erhält die Person, sobald sie etwa die grundsätzlich beobachtete Umgebungszone betritt und somit eine Interaktion möglich ist, eine Information darüber, dass sie eine Aktion wie eine Buchung vornehmen kann. Auf diese Weise können Buchungsvorgänge noch bedienerfreundlicher und Fehlbuchungen vermieden werden, da Personen, die in Interaktion mit dem Anwesenheitserfassungs-Terminal treten möchte, nicht mehr verleitet sind, die Interaktion zu früh zu initiieren. Dabei kann mit einem Wertebereich der detektierten Präsenzinformation gemeint sein, dass lediglich die Information ausgegeben wird, dass sich eine Person in der Umgebungszone befindet. Es kann hiermit auch gemeint sein, dass eine gewisse vorgegebene Stärke des entsprechenden Signals, über welches die Person in der Umgebungszone detektiert worden ist, als Schwellenwert erreicht werden muss.

Dabei kann die Initiierungs-Information insbesondere wie folgt ausgebildet sein:
- ein Sprachsignal oder ein akustisches Signal, und/oder
- ein grafisches Signal, und/oder
- ein haptisches Signal, insbesondere ein Vibrationssignal.

Dabei kann die Initiierungs-Information grundsätzlich am Anwesenheitserfassungs-Terminal und/oder an einem mobilen Zutrittsmedium der Person ausgegeben werden. Ein akustisches Signal wie ein spezifischer Signalton, oder eine aktive Sprachausgabe durch das Anwesenheitserfassungs-Terminal, oder eine Anzeige im Display des Anwesenheitserfassungs-Terminals als grafisches Signal, oder aber auch ein Vibrieren des mobilen Zutrittsmediums oder der mobilen Endgeräts der Person als haptisches Signal können die Interaktion zwischen Person und Anwesenheitserfassungs-Terminal besonders zügig und intuitiv ablaufen lassen.

Bevorzugt kann die Art, wie die Initiierungs-Information ausgegeben wird, auch personenspezifisch sein. Hierzu kann beispielsweise auf die Speicherverwaltungseinheit zugegriffen werden, in welcher Informationen über die individuellen Bedürfnisse bzw. Wünsche der entsprechenden Person hinterlegt sein können. Nach einer Ausführungsform ist demnach vorgeschlagen, dass die Speicherverwaltungseinheit einen Stammsatz personenspezifischer Daten umfasst, wobei die Speicherverwaltungseinheit derart eingerichtet ist, dass, wenn eine Initiierungs-Information an die Person ausgegeben werden soll, die Speicherverwaltungseinheit in den Daten der Person überprüft, welcher Typ an Initiierungs-Information durch die Person gewünscht ist.

Nach einer weiteren Ausführungsform ist vorgeschlagen, dass die Umgebungszone in eine Mehrzahl an Unterzonen aufgeteilt ist. Vorzugsweise umfasst die Mehrzahl an Unterzonen zumindest folgende Unterzonen:
- eine Nahzone, sowie
- eine Fernzone,
wobei die Nahzone näher an dem Anwesenheitserfassungs-Terminal angeordnet ist als die Fernzone. Dabei gibt die Sensoreinheit insbesondere eine spezifische detektierte Präsenzinformation der Person in Abhängigkeit von einem bzw. mehreren zonenspezifischen Signal/Signalen aus, wobei das/die zonenspezifische/zonenspezifischen Signal/Signale durch die Person in der Unterzone ausgelöst wird bzw. werden. Die Nahzone ist dem Anwesenheitserfassungs-Terminal folglich am nächsten angeordnet. Unter Auslösen eines zonenspezifischen Signal ist nicht ausschließlich beschränkend zu verstehen, dass eine Person etwa aktiv ein Signal auslösen müsste. Vielmehr wird das zonenspezifische Signal durch die Person hervorgerufen, etwa durch die Anwesenheit bzw. durch die Art einer Fortbewegung der Person in der jeweiligen Unterzone. So kann beispielsweise über ein Kamera-Tracking eine Person in der Unterzone bzw. deren Bewegung verfolgt werden und daraus ein zonenspezifisches Signal generiert werden. Das zonenspezifische Signal kann durch die Anwesenheit bzw. die Bewegung der Person in der Unterzone bewirkt bzw. hervorgerufen werden.

Vorzugsweise kann die spezifische detektierte Präsenzinformation der Person eine Information bzw. mehrere Informationen über folgende Umstände umfassen:
- in welcher Unterzone sich die Person befindet, und/oder
- in welche Unterzone sich die Person begibt, und/oder
- wie ein Bewegungsmuster der Person aussieht.

Das Bewegungsmuster der Person kann sich insbesondere darauf beziehen, wie eine Bewegungsrichtung der Person und/oder eine Bewegungsgeschwindigkeit der Person ist. Die Bewegungsrichtung kann dabei über einen Richtungsvektor über die Zeit repräsentiert sein. Hierüber kann das Bewegungsmuster der Person innerhalb einer Umgebungszone bzw. Unterzone erfasst und etwa der Analyse der Absicht der Interaktion oder aber auch der Entscheidung, ob eine engine aktiviert werden soll oder nicht, zugrunde gelegt werden. Mit der Information, in welche Unterzone sich eine Person begibt, wird ein Zonenwechsel einer Person erfassbar und kann der Analyse zugrunde gelegt werden.

Das technische Mittel zur Erkennung der Position, also der Anwesenheit, bzw. der Bewegung der Person etwa in einer Unterzone kann vorteilhaft die Sensoreinheit sein. Die Sensoreinheit umfasst dabei vorteilhaft eine Kamera.

Die Feststellung der Anwesenheit der Person, in welcher Unterzone diese sich gerade konkret befindet, oder der Bewegungsmuster der Person können somit vorteilhaft genutzt werden, um das Anwesenheitserfassungs-Terminal in entsprechende Betriebszustände zu versetzen bzw. entsprechende engines (Einrichtungen) oder aber auch Sensoren (der Sensoreinheit) zu aktivieren. So kann sich beispielsweise die identification engine sowie gegebenenfalls auch die intent engine in einem Sleep Mode (Energiesparmodus) befinden, bis die Sensoreinheit die Anwesenheit in einer bestimmten Unterzone detektiert hat. Auch der Zeitpunkt, wann die Wakeup engine die interaction detection engine aktiviert, kann davon abhängig gemacht werden, in welcher Unterzone sich die Person befindet bzw. wie sich die Person in einer bzw. in einer Unterzone fortbewegt. Ebenso kann spezifische Präsenzinformation vorteilhaft zur Interpretation der Absicht der Interkation der Person mit dem Anwesenheitserfassungs-Terminal genutzt werden. Insbesondere kann die Mehrzahl an Unterzonen ferner eine mittlere Zone umfasst, wobei die mittlere Zone näher an dem Anwesenheitserfassungs-Terminal angeordnet ist als die Fernzone.

Vorzugsweise kann die Wakeup engine derart eingerichtet sein, dass sie folgende engines aktivieren kann:
- die interaction detection engine, und/oder
- eine/die voice detection engine, und/oder
- eine/die gesture detection engine, und/oder
- die identification engine, und/oder
- eine/die Feedback engine.

Insbesondere kann die Aktivierung in Abhängigkeit von der spezifischen detektierten Präsenzinformation der Person erfolgen. Ferner kann die Wakeup engine vorzugsweise zum Deaktivieren der interaction detection engine, einer/der voice detection engine, einer/der gesture detection engine, der identification engine, und/oder einer/der Feedback engine, vorzugsweise in Abhängigkeit von der spezifischen detektierten Präsenzinformation der Person, eingerichtet sein. Über die Wakeup engine können demnach alle weiteren engines in einen betriebsbereiten Zustand versetzt werden, wobei dies davon abhängig erfolgen kann, wo sich die Person gerade befindet bzw. wie sie sich fortbewegt. Auf diese Weise kann eine gezielte Aktivierung stattfinden, wenn einer Interaktion der Person mit dem Anwesenheitserfassungs-Terminal zu erwarten ist. Eine gezielte Deaktivierung kann beispielsweise dann vorteilhaft sein, wenn die erfasste Person ihre Position über einen vorgegebenen Zeitraum nicht mehr ändert oder wenn die erfasste Person sich von dem Anwesenheitserfassungs-Terminal weg bewegt und demnach geschlossen werden kann, dass eine Interaktion nicht (mehr) gewünscht ist.

Vorzugsweise kann die identification engine derart eingerichtet sein, dass sie erst aktiviert wird, wenn die Person die Umgebungszone, insbesondere die Fernzone, betritt. Alternativ oder zusätzlich kann die interaction detection engine derart eingerichtet sein, dass sie erst aktiviert wird, wenn die Person die Umgebungszone, insbesondere die Nahzone, betritt. In vorteilhafter Weise kann das Anwesenheitserfassungs-Terminal sodann energiesparender ausgeführt sein. Auf diese Weise kann zudem eine Interaktion mit dem Anwesenheitserfassungs-Terminal bedienerfreundlicher und schneller ablaufen, da eine zweistufige Aktivierung der identification engine bzw. der interaction detection engine in einer geringeren Zeit resultiert, bis das System aktiv ist.

Vorzugsweise kann eine/die Aktivierung und/oder die Deaktivierung der identification engine, und/oder einer/der voice detection engine, und/oder einer/der gesture detection engine, und/oder der identification engine, und/oder einer/der Feedback engine in Abhängigkeit von einem/dem Bewegungsmuster der Person, insbesondere von einer Bewegungsrichtung der Person und/oder einer Bewegungsgeschwindigkeit der Person, erfolgen. Ein Beispiel kann sein, dass eine schnellere Bewegung einer Person detektiert wird, welche sodann zu einer Aktivierung der identification engine führt, da eine Interaktion zu erwarten ist. In vorteilhafter Weise kann das Anwesenheitserfassungs-Terminal sodann energiesparender ausgeführt sein. Auf diese Weise kann zudem eine Interaktion mit dem Anwesenheitserfassungs-Terminal bedienerfreundlicher und schneller ablaufen, da eine zweistufige Aktivierung der genannten engines in einer geringeren Zeit resultiert, bis das System aktiv ist.

Nach einer vorteilhaften Weiterbildung kann die spezifische detektierte Präsenzinformation der Person mittels Machine Learning analysiert werden und beispielsweise eine Absicht der Interaktion der Person erfasst werden oder auch der Rückschluss gezogen werden, dass eine entsprechende engine zu aktivieren ist. Hierzu kann beispielsweise ein Abgleich eines erfassten Verhaltens der Person, wie etwa eines Bewegungsmusters, mit bekannten angelernten Verhalten bzw. Bewegungsmustern erfolgen. Dazu kann die Steuereinheit bzw. identification engine bzw. intent engine eine KI mit einer Machine Learning engine aufweisen.

Nach einer weiteren Ausführungsform ist vorgeschlagen, dass die identification engine ferner zur Verifizierung der Person und zur Ausgabe einer Verifizierungsinformation eingerichtet ist, wobei die Verifizierung der Person auf Basis der detektierten Präsenzinformation der Person und/oder auf Basis der weiteren personenbezogenen Information erfolgt. Über die zusätzliche zweite Schleife in Form der Verifizierung der Person, die nach der grundsätzlichen Identifizierung zusätzlich abläuft, kann die Gefahr von Fehlbuchungen reduziert werden. So kann vorteilhaft verhindert werden, dass eine Person für einen anderen Dritten eine Buchung vornimmt. Der Buchungsvorgang kann ebenso von jener Verifizierungsinformation abhängig gemacht werden, indem die Verifizierungsinformation als weitere Buchungsinformation dient, die mit einer entsprechenden hinterlegten Buchungsinformation abgeglichen wird. Eine Buchung kann demnach nur erfolgen, wenn die Verifizierungsinformation einem vorgegebenem, etwa in der Speicherverwaltungseinheit hinterlegtem, Wert entspricht.

Weiterhin kann vorgesehen sein, dass die identification engine wenigstens eine Anti-Spoofing engine zur Differenzierung zwischen einer realen Person und einem Foto einer Person umfasst. Auf diese Weise kann vorteilhaft erkannt werden, falls eine bewusste Täuschung etwa dahingehend durch eine Person unternommen wird, indem die Person ein Foto der Sensoreinheit, sprich in diesem Fall einer Kamera, vorhält und somit versucht einen Buchungsvorgang auszulösen.

Nach einer weiteren Ausführungsform ist vorgesehen, dass die Sensoreinheit wenigstens eine der folgenden Einheiten umfasst:
- wenigstens eine Kamera,
- wenigstens einen biometrischen Sensor,
- wenigstens einen Annäherungssensor und/oder
- wenigstens eine mobile access engine.

Insbesondere über die Kamera kann mittels eines Kamera-Trackings vorteilhaft die Bewegung oder aber auch die Körperhaltung oder Gesten der Person der Analyse zugrunde gelegt werden, um welche Person es sich handelt und gegebenenfalls gar, welche Absicht der Interaktion gewünscht ist. Im Falle einer mobile access engine (mobile Zutrittseinrichtung) kann die mobile access engine der Sensoreinheit so konfiguriert sein, dass, zum Detektieren der Präsenzinformation der Person, ein Kommunikationsaustausch zwischen der mobile access engine und einem mobilen Zutrittsmedium der Person stattfindet. Die mobile access engine kann dabei als Software in dem Anwesenheitserfassungs-Terminal bzw. in der Sensoreinheit realisiert sein bzw. eine Software umfassen, über welche Software der Kommunikationsaustausch zwischen der Person und der Sensoreinheit ausgewertet und gegebenenfalls die detektierte Präsenzinformation erzeugt und ausgegeben werden kann. Eine kontaktlose Erkennung der Person durch die Sensoreinheit und somit Interaktion der Person mit dem Anwesenheitserfassungs-Terminal ist besonders vorteilhaft, da die Notwendigkeit eines nahen Herantretens der Person an das Anwesenheitserfassungs-Terminal entfällt.

Nach einer weiteren Ausführungsform kann die identification engine wenigstens eine der folgenden Einheiten umfassen:
- wenigstens eine Kamera,
- wenigstens einen biometrischen Sensor, und/oder
- wenigstens eine mobile access engine.

Im Falle der mobile access engine (mobile Zutrittseinrichtung) kann die mobile access engine der identification engine so konfiguriert sein, dass, zur Identifizierung der Person, ein Kommunikationsaustausch zwischen der mobile access engine und einem mobilen Zutrittsmedium der Person stattfindet. Über eine eigene Erfassung von personenspezifischen Daten mittels wenigstens einer der genannten Einheiten der identification engine kann vorteilhaft eine genaue Identifizierung der Person, welche mit dem Anwesenheitserfassungs-Terminal interagiert, erfolgen.

Nach einer weiteren Ausführungsform kann das mobile Zutrittsmedium der Person als Zutrittskarte, Badge und/oder mobiles Endgerät ausgebildet sein. Auf diese Weise kann eine besonders einfache kontaktlose Kommunikation zwischen der Person und dem Anwesenheitserfassungs-Terminal ablaufen.

Nach einer weiteren Ausführungsform kann ferner eine Feedback engine (Rückmeldungseinrichtung) vorgesehen sein. Die Feedback engine kann dabei derart eingerichtet sein, dass, wenn die Interaktion der Person mit dem Anwesenheitserfassungs-Terminal erfolgt ist, eine Feedback-Information ausgegeben werden kann. Jene Feedback-Information kann vorteilhaft der Information der Person dienen, welche Buchung gewünscht ist oder gar vorgenommen wurde. Diese Feedback-Information kann auch Grundlage für eine weitere Schleife einer Überprüfung im Sinne eines Back Ups für den Buchungsvorgang sein. So kann weiterhin eine interaction confirmation engine (Interaktionsbestätigungseinrichtung) vorgesehen sein, wobei die interaction confirmation engine zum Empfangen einer klarstellenden Absichtsinformation eingerichtet ist, wobei die klarstellende Absichtsinformation die Absicht der Interaktion der Person mit dem Anwesenheitserfassungs-Terminal verifiziert oder falsifiziert. Sodann kann abhängig von dem einer Person zurückgemeldeten Feedback diese Person eine positive klarstellende Absichtsinformation dem Anwesenheitserfassungs-Terminal zur Verifizierung der Absicht übermitteln oder eben eine negative, um die geplante Aktion bzw. Buchung zu verhindern. Die interaction confirmation engine kann zumindest teilweise als Software in dem Anwesenheitserfassungs-Terminal bzw. in der Steuereinheit realisiert sein, über welche Software entsprechende Signale bzw. Handlungen der Person zur Bestätigung bzw. Verneinung der zuvor kommunizierten Absicht der Interaktion ausgewertet werden können.

Nach einer weiteren Ausführungsform kann die interaction confirmation engine als voice detection engine (Spracherkennungseinrichtung) zur Erfassung einer Spracheingabe durch die Person und/oder als gesture detection engine (Gestenerkennungseinrichtung) zur Erfassung einer Gesteneingabe durch die Person ausgebildet sein. Auf diese Weise kann durch die Person über eine einfache Spracheingabe oder über eine vorbestimmte Geste die zuvor durch das Anwesenheitserfassungs-Terminal kommunizierte Absicht der Interaktion bestätigt werden. Die Sicherheit der Buchungsvorgänge dahingehend, dass keine Fehlbuchungen stattfinden, kann weiter erhöht werden. Die voice detection engine gesture und/oder die detection engine kann als Software ausgeführt sein oder eine Software umfassen.

Insbesondere kann die Feedback-Information wie folgt ausgebildet sein:
- ein Sprachsignal, und/oder
- ein grafisches Signal, und/oder
- ein haptisches Signal, insbesondere ein Vibrationssignal.

Die Feedback-Information kann am Anwesenheitserfassungs-Terminal und/oder an einem/dem mobilen Zutrittsmedium der Person ausgegeben werden. Unter einem Sprachsignal kann auch ein einfaches akustisches Signal verstanden werden.

Die Feedback-Information kann insbesondere auch eine Aufforderung oder eine Benutzerinformationen umfassen, mit der ein Unterhalter des Anwesenheitserfassungs-Terminals (z.B. Arbeitgeber) die Person, die als Benutzer mit dem Anwesenheitserfassungs-Terminal interagiert, zu etwas auffordert (z.B. Aufforderung "bei Personalabteilung melden", "bitte Überstunden reduzieren" etc.) oder diese über etwas informiert (z.B. Zeitkontostand).

Es kann vorgesehen sein, dass sensible personenspezifische Informationen nur auf einem mobilen Endgerät der Person ausgeben werden, während allgemeine und nicht sensible Informationen nur auf dem Terminal oder auf dem Terminal sowie dem mobilen Endgerät ausgeben werden.

Die Feedback engine kann zumindest teilweise als Software in dem Anwesenheitserfassungs-Terminal bzw. in der Steuereinheit realisiert sein, über welche Software zum einen mithilfe der Speicherverwaltungseinheit überprüft werden kann, ob die Person überhaupt ein Feedback wünscht und, zum anderen, das entsprechende Feedback veranlasst werden kann. Dementsprechend kann die Feedback engine bzw. die Steuereinheit in Kommunikationsverbindung mit einer Sprachausgabeeinheit stehen, falls etwa ein Sprachsignal als Feedback-Information gewünscht ist.

Nach einer weiteren Ausführungsform kann die Speicherverwaltungseinheit einen/den Stammsatz personenspezifischer Daten umfassen, wobei die Speicherverwaltungseinheit derart eingerichtet ist, dass, wenn die Anwesenheitsinformation gespeichert worden ist, die Speicherverwaltungseinheit in den Daten der Person überprüft, ob ein Feedback zu der Interaktion der Person mit dem Anwesenheitserfassungs-Terminal gewünscht ist. Auf diese Weise kann die Interaktion zwischen Personen und Anwesenheitserfassungs-Terminal vorteilhaft individualisiert und besonders bedienerfreundlich, da spezifisch für die jeweilige Person, ablaufen. Besonders vorteilhaft kann etwa im Stammsatz der personenspezifischen Daten vor Ausgabe einer Feedback-Information kontrolliert werden, ob die konkrete Person, die die Interaktion durchführt und zuvor identifiziert wurde, überhaupt ein Feedback wünscht, bzw. falls ja, in welcher Form das Feedback gewünscht ist. Die Feedback engine kann demnach derart eingerichtet sein, dass eine personenabhängige Feedback-Information ausgegeben werden kann. So kann beispielsweise ein Sprachsignal als Feedback in derjenigen Sprache erfolgen, die die interagierende Person spricht. Ferner kann auch für die Person spezifisch hinterlegt sein, ob überhaupt ein sprachliches Feedback oder etwa ein grafisches oder haptisches Feedback erwünscht ist. Außerdem kann auf die individuellen Bedürfnisse der Personen eingegangen werden. So kann im Fall eine Hörbehinderung einer Person auf ein Sprachsignal als Feedback-Information verzichtet werden, sondern nur ein grafischen und/oder haptisches Signal ausgegeben werden. Im Falle einer Person mit Sehbehinderung etwa kann beispielsweise bevorzugt auf ein akustisches bzw. sprachliches Signal oder haptisches Signal zurückgegriffen werden.

Weiterhin wird die Aufgabe durch ein Computerprogramm gelöst, welches Computerprogramm Befehle umfasst, die bei der Ausführung des Programms durch einen Prozessor eines Anwesenheitserfassungs-Terminals das Anwesenheitserfassungs-Terminal veranlassen, die Schritte des zuvor bzw. nachfolgend beschriebenen vorschlagsgemäßen Verfahrens auszuführen.

Weiterhin wird ein computerlesbares Medium vorgeschlagen, auf dem das zuvor genannte Computerprogramm gespeichert ist.

Weitere vorteilhafte und bevorzugte Ausgestaltungen ergeben sich aus der nachfolgenden Beschreibung mit Bezug auf die Figuren. In den lediglich Ausführungsbeispiele wiedergebenden Zeichnungen zeigt
- Figur 1: eine schematische Konfiguration eines Ausführungsbeispiels des vorschlagsgemäßen Anwesenheitserfassungs-Terminals;
- Figur 2: eine schematische Konfiguration eines Ausführungsbeispiels einer identification engine des vorschlagsgemäßen Anwesenheitserfassungs-Terminals;
- Figur 3: eine schematische Draufsicht auf eine Anordnung eines vorschlagsgemäßen Anwesenheitserfassungs-Terminals in einem Flur;
- Figur 4: ein Flussdiagramm der Verfahrensschritte eines vorschlagsgemäßen computerimplementierten Verfahrens zum Betreiben eines Anwesenheitserfassungs-Terminals; und
- Figur 5: eine schematische Konfiguration eines Ausführungsbeispiels einer Steuereinheit des vorschlagsgemäßen Anwesenheitserfassungs-Terminals.

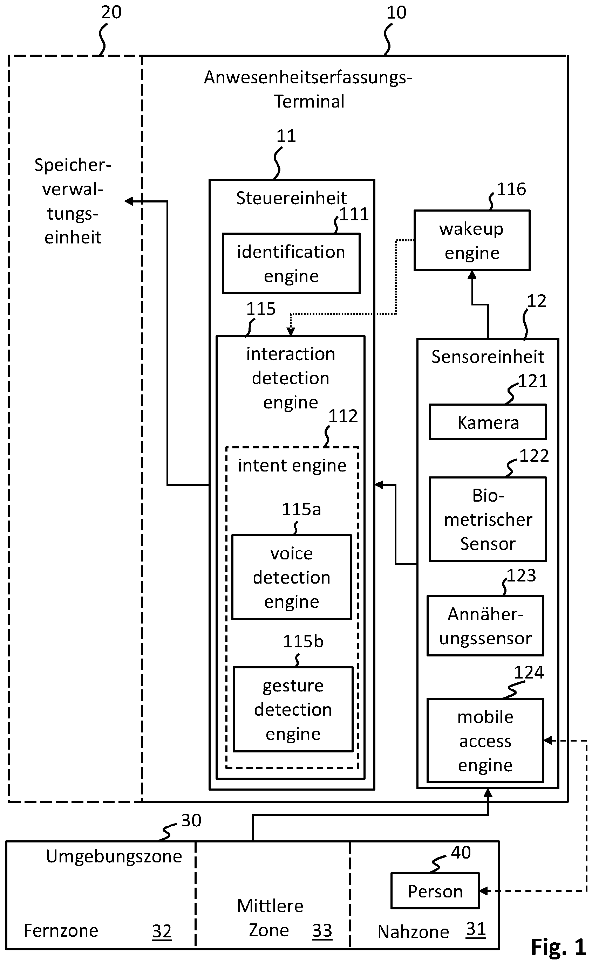

In Figur 1 ist schematisch die Konfiguration eines Ausführungsbeispiels eines vorschlagsgemäßen Anwesenheitserfassungs-Terminals 10 dargestellt. Bei dem Anwesenheitserfassungs-Terminal 10 handelt es sich um ein Zeiterfassungs-Terminal, welches dem Zweck dient, eine Zeiterfassung von Mitarbeitern/-innen beispielsweise am Eingang eines Unternehmensgebäudes zu ermöglichen. Konkret können an dem Zeiterfassungs-Terminal unterschiedliche Buchungsvorgänge durchgeführt und somit unterschiedliche Anwesenheitsinformationen gespeichert bzw. verarbeitet werden. So kann ein Mitarbeiter/eine Mitarbeiterin etwa seine/ihre Anwesenheit einbuchen oder ausbuchen, wenn dieser/diese etwa eine Pause macht oder sein/ihr Arbeitstag beendet ist.

Das Anwesenheitserfassungs-Terminal 10 ist demnach zur Erfassung einer Anwesenheitsinformation einer Person 40 auf Basis einer Aktion der Person 40 eingerichtet. Das Anwesenheitserfassungs-Terminal 10 umfasst, wie in Figur 1 dargestellt, eine Steuereinheit 11, eine Sensoreinheit 12, sowie eine Speicherverwaltungseinheit 20.

Die Speicherverwaltungseinheit 20 kann dabei lokal vorgesehen und beispielsweise integrierter Bestandteil des Anwesenheitserfassungs-Terminals 10 sein oder die Speicherverwaltungseinheit 20 kann ebenso online in einer Cloud vorgesehen sein. Dies ist in Figur 1 über die gestrichelten Linien angedeutet. Sodann kann das Anwesenheitserfassungs-Terminal 10 etwa über die Steuereinheit 11 eine Onlineverbindung zu der Speicherverwaltungseinheit 20 herstellen und auf diese Weise mit der Speicherverwaltungseinheit 20 kommunizieren.

In der Speicherverwaltungseinheit 20 sind Stammsätze der Personen 40, welche Personen 40 mit dem Anwesenheitserfassungs-Terminal 10 interagieren, hinterlegt. In den Stammsätzen können personenspezifische Daten, beispielsweise mitarbeiterspezifische Informationen wie etwa die Arbeitszeiten, gespeichert sein. Die personenspezifischen Daten stehen dem Anwesenheitserfassungs-Terminal 10 bzw. dessen Steuereinheit 11 via Kommunikationsverbindung zwischen Speicherverwaltungseinheit 20 und Steuereinheit 11 zur Verfügung. Die Speicherverwaltungseinheit 20 verarbeitet und speichert zudem bestimmungsgemäß die Anwesenheitsinformation der Person 40, beispielsweise, dass diese nun zur Arbeit erschienen ist und ihre Arbeitszeiterfassung beginnen soll.

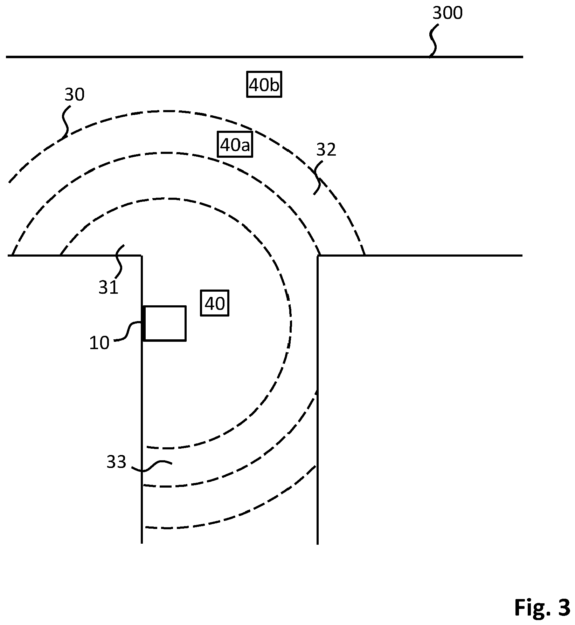

Das Anwesenheitserfassungs-Terminal 10 weist hierzu die Sensoreinheit 12 auf. Die Sensoreinheit 12 beobachtet eine Umgebungszone 30, welche Umgebungszone 30 das Anwesenheitserfassungs-Terminal 10 umgibt (vgl. ebenso Figur 3). Die Sensoreinheit 12 empfängt demnach Signale aus der Umgebungszone 30, wie durch den Pfeil in Figur 1 angedeutet.

Die Sensoreinheit 12 kann zur Beobachtung der Umgebungszone 30 unterschiedliche Einheiten aufweisen. Im Ausführungsbeispiel der Figur 1 weist die Sensoreinheit 12 die vier folgenden Einheiten auf: eine Kamera 121, einen biometrischen Sensor 122, einen Annäherungssensor 123 und eine mobile access engine 124. Dabei kann die Sensoreinheit 12 auch nur eine der Einheiten oder unterschiedliche Kombinationen der Einheiten aufweisen. Auch das Vorsehen zweier typgleicher Einheiten, etwa zweier Kameras 121 ist möglich. Es können auch mehrere separat operierende Sensoreinheiten unterschiedlicher Konfigurationen vorgesehen sein.

Über die genannten Einheiten der Sensoreinheit 12 wird die Anwesenheit der Person 40 in der Umgebungszone 30 erfasst, sodass die detektierte Präsenzinformation der Person 40 ausgegeben werden kann. Hierzu beobachtet beispielsweise die auf die Umgebungszone 30 gerichtete Kamera 121 den entsprechenden Raum, zum Beispiel einen das Anwesenheitserfassungs-Terminal 10 umgebenden Flur (300 in Figur 3), und erkennt mittels Bildverarbeitung, sobald die Person 40 die Umgebungszone 30 betritt.

Der biometrische Sensor 122 der Sensoreinheit 12 kann wiederum eine direkte Aktion der Person 40 an der Sensoreinheit 12 und somit am Anwesenheitserfassungs-Terminal 10 erfassen. Hierzu kann beispielsweise die Person 40 an dem biometrischen Sensor 122 einen Fingerabdruckscan durchführen oder ein sonstiges Signal auslösen.

Der Annäherungssensor 123 der Sensoreinheit 12 kann in verschiedenen Ausführungsformen ausgestaltet sein und die Anwesenheit der Person 40 in der Umgebungszone 30 kontaktlos erfassen.

Die mobile access engine 124 (mobile Zutrittseinrichtung) der Sensoreinheit 12 erfasst die Anwesenheit der Person 40 in der Umgebungszone 30 über einen Kommunikationsaustausch zwischen der mobile access engine 124 und der Person 40, konkret einem mobilen Zutrittsmedium der Person 40. Bei dem mobilen Zutrittsmedium der Person 40 kann es sich um eine Zutrittskarte handeln, wie etwa eine Schlüsselkarte. Es kann auch ein schlüsselloser Transponder (Badge) verwendet werden oder aber auch ein mobiles Endgerät der Person 40, welches mobile Endgerät über eine spezifische Anwendung zur Kommunikation mit der mobile access engine 124 verfügt.

Die mobile access engine 124 der Sensoreinheit 12 ist derart konfiguriert, dass ein in Figur 1 über den gestrichelten Doppelpfeil angedeuteter Kommunikationsaustausch zwischen der mobile access engine 124 und dem mobilen Zutrittsmedium der Person stattfindet, um die Anwesenheit der Person 40 zu erfassen und die detektierte Präsenzinformation ausgeben zu können.

Beispielsweise kann der schlüssellose Transponder (Badge) oder die Zutrittskarte der Person 40 auch mit RFID- oder auch mit UWB-Technologie (Ultra-Wideband) ausgestattet sein. Ein entsprechendes RFID- oder UWB-Modul der mobile access engine 124 detektiert sodann, wenn die Person 40 die Umgebungszone 30 betritt. Diese Funktion ist auch über eine Anwendung auf dem mobilen Endgerät der Person 40 realisierbar.

Die mobile access engine 124 kann als Software in dem Anwesenheitserfassungs-Terminal 10 bzw. in der Sensoreinheit 12 realisiert sein bzw. eine Software umfassen, über welche Software der Kommunikationsaustausch zwischen der Person 40 und der Sensoreinheit 12 ausgewertet und gegebenenfalls die detektierte Präsenzinformation erzeugt und ausgegeben wird.

Beobachtet die Sensoreinheit 12 etwa auf eine der beschriebenen Weisen, dass sich eine Person 40 in der Umgebungszone 30 befindet bzw. die Umgebungszone 30 betritt, so gibt die Sensoreinheit 12 eine detektierte Präsenzinformation der Person 40 aus. Eine beispielsweise in die Steuereinheit 11 integrierte identification engine 111 (Identifikationseinrichtung) kann auf der Grundlager jener detektierten Präsenzinformation der Person 40 die Person 40 identifizieren. Die identification engine 111 ist dabei zur Ausgabe einer Identifizierungsinformation eingerichtet, welche Identifizierungsinformation für eine jeweilige Person 40 eindeutig oder jedenfalls jene Person 40 eindeutig einer vorgegebenen Personengruppe zuordnen kann. So kann es zum Beispiel für manche Interaktionen auch nicht unbedingt notwendig sein, die konkrete Person 40 eindeutig zu identifizieren, sondern sie lediglich einer Personen-Gruppe zuzuweisen. Beispielsweise kann erkannt werden, dass die Person 40 grundsätzlich einer "erlaubten" Personen-Gruppe zugehört, sodass die Person 40 eben eine Interaktion durchführen kann, solange die Interaktion nicht eine tiefergehende eindeutige Identifizierung erfordert.

Die identification engine 111 kann als Software in dem Anwesenheitserfassungs-Terminal 10 bzw. in der Steuereinheit 11 realisiert sein bzw. eine Software umfassen, über welche Software detektierte Präsenzinformation der Person 40 oder aber auch weitere personenbezogene Informationen ausgewertet werden können.

Wurde von der Sensoreinheit 12 also grundsätzlich eine Person 40 erkannt, so kann diese mittels der identification engine 111 konkret identifiziert werden. Die angesprochenen weiteren personenbezogenen Informationen, die zur Identifizierung herangezogen werden können, müssen dabei keine persönlichen Daten umfassen, sondern nur eine Eindeutigkeit der Person 40 bzw. eine eindeutige Unterscheidbarkeit einer Person von anderen Personen ermöglichen.

Bei der detektierten Präsenzinformation kann es sich im Beispiel einer Kamera 121 etwa um ein Foto der Person 40 handeln. Es könnte jedoch auch lediglich das Signal, dass die Kamera 121 eine Person erfasst hat, als einfache detektierte Präsenzinformation der Steuereinheit 11 bzw. der identification engine 111 zur Verfügung gestellt werden. Das konkrete Foto der Person 40 könnte als weitere personenbezogene Information zur Verfügung gestellt werden, auf deren Grundlage sodann die konkrete Identifizierung stattfindet.

Die identification engine 111 ist darüber hinaus zur Verifizierung der Person 40 und zur Ausgabe einer Verifizierungsinformation eingerichtet. Unter Verifizierung ist hier ein Detailgrad mehr gemeint als eine simple Identifizierung. So kann über die beschriebene Identifizierung die Person 40 an sich erkannt bzw. einer Personen-Gruppe zugordnet werden. Unter Verifizierung ist jedoch weitergehende gemeint, dass auch überprüft wird, ob die identifizierte Person 40 etwa eine reale Person ist oder ob nicht eine Täuschung vorliegt, da beispielsweise der Versuch einer bewussten Falschbuchung unternommen wird. Dabei erfolgt die Verifizierung der Person 40 auf Basis der detektierten Präsenzinformation der Person 40 und/oder auf Basis der weiteren personenbezogenen Information.

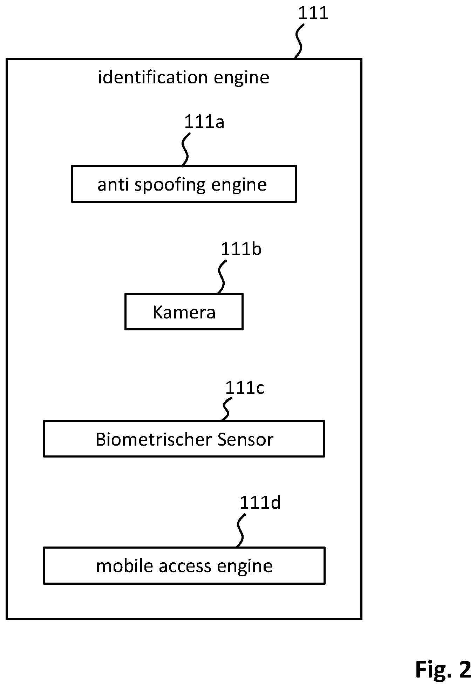

Die identification engine 111 kann hierzu, wie im Ausführungsbeispiel der Figur 2, welches eine identification engine 111 detailliert darstellt, ersichtlich, eine Anti-Spoofing engine lila umfassen. Über die Anti-Spoofing engine lila, welche als Software in der identification engine 111 realisiert sein bzw. eine Software umfassen kann, kann zwischen realen Personen und lediglich vor die Kamera 121 gehaltenen Fotos einer Person unterschieden werden. Eine solche Anti-Spoofing engine lila ist besonders vorteilhaft, wenn Kameras 121 als Sensoreinheiten 12 zum Einsatz kommen, um eine bewusst falsche Buchung am Anwesenheitserfassungs-Terminal 10 zu unterbinden.

Die identification engine 111 bekommt also entweder detektierte Präsenzinformationen oder weitere personenbezogene Informationen zur Auswertung und Identifizierung der Person 40 bereitgestellt oder aber die identification engine 111 kann entsprechende Informationen auch selbst detektieren. Hierzu kann, wie in dem Ausführungsbeispiel der identification engine 111 in Figur 2 dargestellt, die identification engine 111 ebenso wenigstens eine der folgenden Einheiten umfassen: wenigstens eine Kamera 111b, wenigstens einen biometrischen Sensor 111c, und/oder wenigstens eine mobile access engine 111d. Die Funktionalitäten der einzelnen Einheiten wurde zuvor bereits im Zusammenhang mit der Sensoreinheit 12 beschrieben, worauf verwiesen werden kann. Explizit sei erwähnt, dass die mobile access engine 111d der identification engine 111 so konfiguriert ist, dass, zur Identifizierung der Person 40, ein Kommunikationsaustausch zwischen der mobile access engine 111d und einem mobilen Zutrittsmedium (Badge, Zutrittskarte, mobiles Endgerät bzw. Anwendung auf mobilem Endgerät oder dergleichen) der Person 40 stattfindet.

Grundsätzlich kann zur Reduzierung einzelner Einheiten auch vorgesehen sein, dass die identification engine 111 direkt auf die Einheiten der Sensoreinheit 12 (Kamera 121, biometrischer Sensor 122, mobile access engine 124) zugreifen kann bzw. entsprechende Informationen von diesen zur Verfügung gestellt bekommt.

Weiterhin kann auch vorgesehen sein, dass die Sensoreinheit 12 und die Steuereinheit 11 bzw. die identification engine 111 integraler Bestandteil des Anwesenheitserfassungs-Terminals 10 und beispielsweise mitsamt den entsprechenden Sensoren gemeinsam in einem Gehäuse des Anwesenheitserfassungs-Terminals 10 verbaut sind. Es kann jedoch auch vorteilhaft sein, die Sensoreinheit 12 oder einen Teil der Sensoreinheit 12, beispielsweise die Kamera 121, außerhalb des Anwesenheitserfassungs-Terminals 10 an einem günstigen Punkt der Umgebungszone 30 anzuordnen, während etwa die identification engine 111 beispielsweise mit ihrer Kamera 111b integraler Bestandteil des Anwesenheitserfassungs-Terminals 10 ist. Sodann kann über die Sensoreinheit 12 vorteilhaft zunächst das grundsätzliche Detektieren einer Person bereits weiter entfernt vom Anwesenheitserfassungs-Terminal 10 erfolgen, während die Identifizierung der Person 40 mittels der identification engine 111 auf Grundlage der an der Kamera 111b generierten Informationen am Anwesenheitserfassungs-Terminal 10 selbst erfolgt.

Die Sensoreinheit 12 und die identification engine 111 bzw. die Steuereinheit 11 können auch derart interagierend eingerichtet sein, dass die Sensoreinheit 12 die identification engine 111 aus einem energiesparenden Sleep Mode (Energiesparmodus) weckt, wenn grundsätzlich die Person 40 durch die Sensoreinheit 12 in der Umgebungszone 30 erfasst wurde. Dadurch kann das Anwesenheitserfassungs-Terminal 10 energiesparender betrieben werden, da die identification engine 111 erst dann arbeitet, wenn eine Person 40 zur genauen Identifizierung am bestimmungsgemäßen Ort der Umgebungszone 30 eingetroffen ist.

Die Umgebungszone 30 wiederum kann, wie Figur 1 und an einem Bespiel einer Anordnung eines Anwesenheitserfassungs-Terminals 10 in einem Flur 300 ebenso Figur 3 zu entnehmen ist, in eine Mehrzahl an Unterzonen aufgeteilt sein. So ist eine Nahzone 31, die dem Anwesenheitserfassungs-Terminal 10 am nächsten angeordnet ist, sowie eine Fernzone 32, die am weitesten vom Anwesenheitserfassungs-Terminal 10 entfernt angeordnet ist, vorgesehen. Zwischen der Nahzone 31 und der Fernzone 32 befindet sich noch eine mittlere Zone 33.

Vorteilhaft gibt die Sensoreinheit 12 eine spezifische detektierte Präsenzinformation der Person 40 aus, und zwar in Abhängigkeit von einem oder mehreren zonenspezifischen Signal/Signalen, das/die von der Person 40 in der genannten Unterzonen sich die Person 40 ausgeht/ausgehen.

Dabei muss das zonenspezifische Signal nicht aktiv durch die Person 40 ausgelöst werden. Vielmehr wird das zonenspezifische Signal durch die Person 40 lediglich hervorgerufen, etwa durch die Anwesenheit bzw. durch die Art einer Fortbewegung der Person 40 in der jeweiligen Unterzone. So kann beispielsweise über ein Kamera-Tracking eine Person 40 in der Unterzone bzw. deren Bewegung verfolgt werden und daraus ein zonenspezifisches Signal generiert werden. Das zonenspezifische Signal kann also durch die einfache Anwesenheit bzw. die Bewegung der Person 40 in der Unterzone bewirkt bzw. hervorgerufen werden.

Dabei können folgende Umstände in das zonenspezifische Signal und somit die spezifische detektierte Präsenzinformation der Person 40 einfließen:
- In welcher Unterzone befindet sich die Person 40, und/oder
- in welche Unterzone begibt sich die Person 40 begibt, und/oder
- wie sieht ein Bewegungsmuster der Person 40 aus?

Das Bewegungsmuster der Person 40 kann sich darauf beziehen, wie eine Bewegungsrichtung der Person 40 und/oder eine Bewegungsgeschwindigkeit der Person 40 ist. Die Bewegungsrichtung kann dabei über einen Richtungsvektor über die Zeit repräsentiert sein. Hierüber kann das Bewegungsmuster der Person 40 innerhalb einer Umgebungszone bzw. Unterzone erfasst und etwa der Analyse der Absicht der Interaktion zugrunde gelegt werden. Mit der Information, in welche Unterzone sich eine Person 40 begibt, wird ein Zonenwechsel einer Person 40 erfassbar und kann der Analyse zugrunde gelegt werden.

Das technische Mittel zur Erkennung der Position, also der Anwesenheit, bzw. der Bewegung der Person 40 etwa in einer Unterzone kann vorteilhaft die Sensoreinheit 12 sein. Die Sensoreinheit 12 umfasst dabei vorteilhaft eine Kamera 121.

Auf diese Weise kann beispielsweise das erwähnte Wecken der identification engine 111 aus dem Sleep Mode in Abhängigkeit davon erfolgen, in welcher Unterzone sich die Person 40 befindet bzw. auf welche Weise sich die Person 40 etwa in einer Unterzone fortbewegt. Betritt die Person 40 beispielsweise lediglich die Fernzone 32 und wird dort grundsätzlich detektiert, nähert sich jene Person 40 jedoch nicht weiter dem Anwesenheitserfassungs-Terminal 10 an und betritt demnach nicht die mittlere Zone 33 oder die Nahzone 31, so kann daraus geschlossen werden, dass die Person 40 gar nicht in Interaktion mit dem Anwesenheitserfassungs-Terminal 10 treten möchte. Ist die identification engine 111 sodann derart eingerichtet, dass sie erst aktiviert wird, wenn die Person 40 die mittlere Zone 33 oder die Nahzone 31 betritt, dann kann das Anwesenheitserfassungs-Terminal 10 besonders sparsam betrieben werden.

Das in Figur 3 wiedergegebene Beispiel eines Flurs 300, der eine T-Gabelung aufweist, veranschaulicht die unterschiedlichen Unterzonen, dargestellt über gestrichelte Teilkreise, die das Anwesenheitserfassungs-Terminal 10 in unterschiedlichen Abständen umgeben. Die Person 40, die sich in der Nahzone 31 befindet, interagiert mit dem Anwesenheitserfassungs-Terminal 10. Die Person 40a wiederum befindet sich in der Fernzone 32, in welcher zwar eine grundsätzliche Detektion der Person 40a mittels der Sensoreinheit 12 des Anwesenheitserfassungs-Terminal 10 stattfindet, welche entsprechende detektierte Präsenzinformation jedoch noch nicht dazu führen würde, dass die identification engine 111 in Bezug auf die Person 40a arbeitet. Erst wenn die Person 40a auch die mittlere Zone 33 bzw. je nach gewünschter Konfiguration die Nahzone 31 betritt, wird die identification engine 111 ebenfalls aktiviert. Die dritte Person 40b wiederum befindet sich außerhalb der gesamten Umgebungszone 30, sodass in Bezug auf die Person 40b gar keine Detektion der Person stattfindet. Das Anwesenheitserfassungs-Terminal 10 detektiert die Person 40b in der dargestellten Konfiguration nicht, da klar ist, dass keine Interaktion mit dem Anwesenheitserfassungs-Terminal 10 durch die Person 40b gewünscht ist.

Das Anwesenheitserfassungs-Terminal 10 bzw. dessen identification engine 111 kann jedoch auch derart eingerichtet sein, dass die identification engine 111 erst bzw. bereits aktiviert wird, wenn die Person 40 allgemein die Umgebungszone 30, bzw. insbesondere die Fernzone 32, betritt. Ebenso kann eine später beschriebene interaction detection engine 111 derart eingerichtet sein, dass sie erst aktiviert wird, wenn die Person 40 die Umgebungszone 30, insbesondere die Nahzone 31, betritt.

Weiterhin umfasst das Anwesenheitserfassungs-Terminal 10 eine interaction detection engine 115 (Interaktionserkennungseinrichtung). Die interaction detection engine 115 erkennt die Aktion der Person 40, welche mit dem Anwesenheitserfassungs-Terminal 10 interagieren möchte. Konkret erkennt die interaction detection engine 115 die Absicht der Interkation der Person 40. Die interaction detection engine 115 dient also der Erkennung, dass und konkret auch welche Buchung die Person 40 am Anwesenheitserfassungs-Terminal 10 vornehmen möchte.

Hierzu kann die interaction detection engine 115, wie in Figur 1 dargestellt, als voice detection engine 115a zur Erfassung einer Spracheingabe durch die Person 40 ausgebildet sein. Ebenso kann die die interaction detection engine 115 alternativ oder auch zusätzlich als gesture detection engine 115b zur Erfassung einer Gesteneingabe durch die Person 40 ausgebildet sein.

Die interaction detection engine 115 kann, wie in Figur 1 durch die gestrichelte Umrandung angedeutet, eine intent engine 112 (Absichtserkennungseinrichtung) umfassen.

Die interaction detection engine 115 bzw. die intent engine 112 können Teil der Steuereinheit 11 sein und können kann als Software in dem Anwesenheitserfassungs-Terminal 10 bzw. in der Steuereinheit 11 realisiert sein bzw. eine Software umfassen, über welche Software spezifische Informationen, die aus den Handlungen der Person 40 resultieren, ausgewertet werden können.

Ferner ist eine Wakeup engine 116 vorgesehen. Die Wakeup engine 116 dient, wie der gepunktete Pfeil andeutet, dem Aktivieren der interaction detection engine 115. Mittels der Wakeup engine 116 wird also die interaction detection engine 115 in den Zustand versetzt, dass eine Erfassung der Aktion der Person 40 möglich ist.

Der Entscheidung der Wakeup engine 116, die interaction detection engine 115 zu aktivieren, liegen die Daten der Sensoreinheit 12 zugrunde. Wird über die entsprechenden Sensoren erkannt, dass die Person 40 eine Interaktion wünscht, so veranlasst die Wakeup engine 116 das Aktivieren der interaction detection engine 115.

Die Wakeup engine 116 kann dabei grundsätzlich derart eingerichtet sein, dass sie die interaction detection engine 115, eine voice detection engine 115a, eine gesture detection engine 115b, die identification engine 111, und/oder eine Feedback engine 113 aktivieren kann. Die Aktivierung kann insbesondere in Abhängigkeit von der spezifischen detektierten Präsenzinformation der Person 40 erfolgen.

Ebenso ist vorzugsweise vorgesehen, dass die Wakeup engine 116 ferner zum Deaktivieren der interaction detection engine 115, der voice detection engine 115a, der gesture detection engine 115b, der identification engine 111, und/oder der Feedback engine 113, vorzugsweise in Abhängigkeit von der spezifischen detektierten Präsenzinformation der Person 40, eingerichtet ist.

Besonders vorteilhaft ist, wenn die Aktivierung und/oder die Deaktivierung der angesprochenen engines (identification engine 111, voice detection engine 115a, gesture detection engine 115b, identification engine 111, und/oder Feedback engine 113) in Abhängigkeit von dem Bewegungsmuster der Person 40 erfolgt. Dabei kann das Bewegungsmuster die Bewegungsrichtung der Person 40 in der Umgebungszone 30 und/oder eine Bewegungsgeschwindigkeit der Person 40 umfassen.

In einer besonders vorteilhaften Ausgestaltung weist die Steuereinheit 11 bzw. weisen die engines eine KI (Künstliche Intelligenz) mit einer Machine Learning engine auf, um etwa die Bewegungsdaten zu analysieren. So kann die spezifische detektierte Präsenzinformation der Person 40 mittels Machine Learning analysiert werden und beispielsweise ein Abgleich eines erfassten Verhaltens der Person 40, wie etwa eines Bewegungsmusters, mit bekannten angelernten Verhalten bzw. Bewegungsmustern erfolgen. Dies kann einerseits einen Einfluss auf die Entscheidung, ob eine engine aktiviert werden soll oder nicht, nehmen, sowie andererseits auch in die nachfolgend beschriebene Erfassung einer Absicht der Interaktion der Person 40 einfließen.

Die interaction detection engine 115 bzw. die intent engine 112 erkennt, nachdem sie von der Wakeup engine 116 aktiviert worden ist, sodann die Absicht der Person 40, warum jene Person 40 mit dem Anwesenheitserfassungs-Terminal 10 in Interaktion tritt. Dazu empfängt die interaction detection engine 115 bzw. die intent engine 112 eine Absichtsinformation, welche Absichtsinformation die Intention der Person 40 über die Interaktion repräsentiert.

Die Absicht der Interaktion kann dabei beispielsweise sein, dass sich die Person 40 einbuchen möchte, da ihre Arbeitszeit beginnt, oder dass sie sich aus dem System zur Zeiterfassung ausbuchen möchte. Weiterhin kann die Absicht der Person 40 auch darin bestehen, etwa eine im Stammdatensatz hinterlegte, spezifische Information abzurufen. So könnte beispielsweise die Person 40 ihre in einem gewissen vordefinierten Zeitraum abgeleistete Anwesenheitszeit bzw. Arbeitszeit abfragen wollen. Auch kann es möglich sein, über das Anwesenheitserfassungs-Terminal 10 in Erfahrung zu bringen, inwiefern noch Guthaben auf einer Schlüsselkarte oder einer personenspezifischen Mitarbeiterkarte vorhanden ist, falls die Schlüsselkarte bzw. die personenspezifische Mitarbeiterkarte auch zur Zahlung in einer Kantine oder dergleichen geeignet ist.

Dabei kann die Absichtsinformation grundsätzlich mit der Sensoreinheit 12 detektiert werden, wobei der Absichtsinformation folgende Daten zugrunde liegen können:
- eine Bewegungsrichtung der Person 40, und/oder
- eine Signaleingabe durch die Person 40.

Dabei kann die Bewegungsrichtung über ein Kamera-Tracking und/oder per Ultra-Wideband Signal erfasst werden. Dies ist besonders vorteilhaft, da keine weitere eigene Aktion durch die Person 40 zur Verarbeitung bzw. Interpretation dieser Daten erforderlich ist. So kann beispielsweise aus der Bewegungsrichtung der Person 40 von außerhalb des entsprechenden Gebäudes in Richtung Anwesenheitserfassungs-Terminal 10 geschlossen werden, dass die Person 40 gerne eine Einbuchung zum Arbeiten vornehmen möchte. Im umgekehrten Fall könnte aus der Bewegungsrichtung grundsätzlich in Richtung Gebäude- oder Etagenausgang geschlossen werden, dass die Person 40 eine Ausbuchung oder das Buchen einer Pause vornehmen möchte.

Es könnten in die Analyse der Bewegung der Person 40 und somit in die Interpretation der Absicht auch personenspezifische Informationen einfließen, die etwa in der Speicherverwaltungseinheit 20 hinterlegt sind. So kann dort hinterlegt sein, dass sich eine Person 40 gerade in einer Pause befindet oder grundsätzlich ausgeloggt ist. Sodann kann etwa aus einer grundsätzlich gewünschten Interaktion dieser Person 40 mit dem Anwesenheitserfassungs-Terminal 10 geschlossen werden, dass sich die Person einbuchen möchte.

Wird die Absichtsinformation der Interaktion der Person 40 über eine aktive Signaleingabe durch die Person 40 übermittelt, dann kann die Signaleingabe beispielsweise wie folgt erfolgen:
- die interaction detection engine 115 bzw. die intent engine 112 empfängt ein von der Person 40 an einem mobilen Endgerät eingegebenes, die Absicht der Interaktion repräsentierendes Signal, und/oder
- die interaction detection engine 115 bzw. die intent engine 112 empfängt eine die Absicht der Interaktion repräsentierende Spracheingabe von der Person 40 oder erkennt eine die Absicht der Interaktion repräsentierende Gesteneingabe von der Person 40, und/oder
- die interaction detection engine 115 bzw. die intent engine 112 verarbeitet ein von der Person 40 an dem Anwesenheitserfassungs-Terminal 10, und zwar beispielsweise an einem Touchscreen-Display, eingegebenes und die Absicht der Interaktion repräsentierendes Signal.

Im erstgenannten Fall einer aktiven Eingabe der Person 40 an ihrem mobilen Endgerät ist vorteilhaft, dass die Absicht der Interkation durch die Person 40 eindeutig eingegeben und somit die Gefahr von Fehlinterpretation reduziert werden kann. Hierzu können in einer Anwendung auf dem mobilen Endgerät der Person 40 die für sie möglichen spezifischen Interaktionen mit dem Anwesenheitserfassungs-Terminal 10 angezeigt und dann durch die Person 40 ausgewählt werden. Durch eine entsprechende Kommunikation des mobilen Endgeräts mit dem Anwesenheitserfassungs-Terminal 10 bzw. konkret mit der interaction detection engine 115 bzw. der intent engine 112 wird sodann die Absicht der Interaktion im Anwesenheitserfassungs-Terminal 10 erfasst und die Absichtsinformation bereitgestellt.

Im zuvor zweitgenannten Fall, dass die Signaleingabe über die Spracheingabe der Person 40 erfolgt oder aber auch, dass die Signaleingabe über eine Gesteneingabe der Person 40 erfolgt, ist eine entsprechende voice detection engine 115a (Spracherkennungseinrichtung) oder gesture detection engine 115b (Gestenerkennungseinrichtung) vorgesehen. Die voice detection engine 115a sowie die gesture detection engine 115b können als Software in der Steuereinheit 11 bzw. in der interaction detection engine 115 bzw. der intent engine 112 realisiert sein bzw. eine Software umfassen, über welche Software das eingehende Sprachsignal der Person 40 bzw. die erfasste Geste bzw. Bewegung der Person 40 spezifische Informationen ausgewertet werden können.

Beispielsweise kann die Person 40 über eine Spracheingabe, wie etwa das Ausrufen des Wortes "Einbuchen", ihre Absicht der Interaktion mit dem Anwesenheitserfassungs-Terminal 10 kommunizieren. Wird jenes Sprachsignal von der voice detection engine 115a erkannt, kann die interaction detection engine 115 bzw. die intent engine 112 sodann die entsprechende Buchung veranlassen. Im Falle einer Geste kann beispielweise vorgesehen sein, dass die Person 40 eine bestimmte Bewegung, die etwa von der Sensoreinheit 12 erfasst wird, ausführen muss, sodass die gesture detection engine 115b diese dann als Einbuchungsabsicht oder Ausbuchungsabsicht erkennt und die entsprechende Absichtsinformation erkennt. Eine Geste kann auch sein, dass die Person 40 mit ihrem mobilen Zutrittsmedium eine vorbestimmte Bewegung ausführt, welche Bewegung sodann drahtlos am Anwesenheitserfassungs-Terminal 10 empfangen und durch die gesture detection engine 112b als entsprechende Absichtsinformation erkannt wird.

Im zuvor drittgenannten Fall ist es beispielsweise erforderlich, dass die Person 40 etwa am Touchscreen-Display des Anwesenheitserfassungs-Terminal 10 selbst ein Signal eingibt, um ihre Absicht auszudrücken. Dabei können von dem Anwesenheitserfassungs-Terminal 10 am Display auch nur mögliche, entsprechende Absichten vorgegeben sein. Die interaction detection engine 115 bzw. die intent engine 112 verarbeitet jenes eingegebene Signal sodann als entsprechenden Absichtsinformation.

Sowohl die beschriebene Absichtsinformation als auch die zuvor geschilderte Identifizierungsinformation können wichtige Buchungsinformationen darstellen, die das Anwesenheitserfassungs-Terminal 10 verarbeitet. Konkret empfängt die Steuereinheit 11 jene Identifizierungsinformation von der identification engine 111 sowie die Absichtsinformation von der interaction detection engine 115 bzw. der intent engine 112 und verarbeitet diese. Dabei findet ein Abgleich statt, ob jene empfangenen Buchungsinformationen mit in der Speicherverwaltungseinheit 20 hinterlegten, vorgegebenen Buchungsinformationen übereinstimmen. So ist über die Identifizierungsinformation die konkret mit dem Anwesenheitserfassungs-Terminal 10 interagierende Person 40 bekannt, sowie über die Absichtsinformation der gewünschte Buchungsvorgang der Person 40. Sollte jene Absicht möglich sein, wie etwa in dem Beispiel, dass sich die Person 40 zur Arbeit einbuchen möchte und in der Speicherverwaltungseinheit 20 hinterlegt ist, dass die Person 40 gerade ausgeloggt und nicht zur Arbeit eingebucht ist, dann kann der entsprechende Buchungsvorgang auf einfache Weise automatisch verarbeitet und gespeichert werden. So wird die zuvor in der Speicherverwaltungseinheit 20 gespeicherte Anwesenheitsinformation der Person 40 lediglich aufgrund der durch die identification engine 111 bereitgestellten Identifizierungsinformation und der durch die interaction detection engine 115 bzw. die intent engine 112 empfangene Absichtsinformation automatisch überschrieben und neu gespeichert.

Das vorschlagsgemäße Anwesenheitserfassungs-Terminal 10 ermöglicht auf diese Weise eine besonders einfache Bedienung und Interaktion zwischen Personen 40 und dem Anwesenheitserfassungs-Terminal 10. So können sowohl die grundsätzliche Anwesenheit der Person 40, welche eine Interaktion wünscht, als auch die konkrete Interaktion selbst, also die Absicht der Interaktion der Person 40, kontaktlos erfasst werden. Die Buchungsvorgänge an dem Anwesenheitserfassungs-Terminal 10 sind stark vereinfacht.

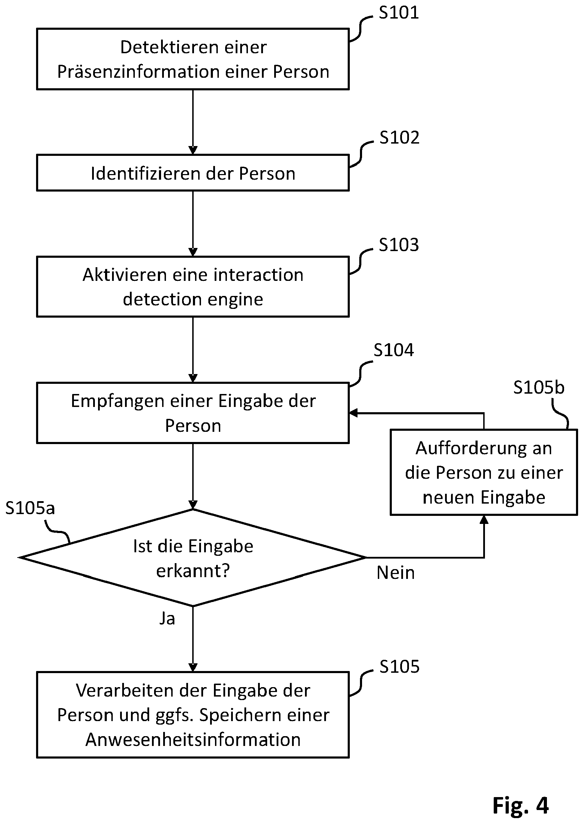

Zur Umsetzung der besonders bedienerfreundlichen intuitiven Interaktion mit dem Anwesenheitserfassungs-Terminal 10 wird das nachfolgende und in Figur 4 schematisch dargestellte computerimplementierte Verfahren zum Betreiben des Anwesenheitserfassungs-Terminals 10 vorgeschlagen: Im Schritt S101 erfolgt das Detektieren der Präsenzinformation der Person 40, wobei die detektierte Präsenzinformation mittels Beobachtens der Umgebungszone 30 mit der wenigstens einen Sensoreinheit 12 generiert wird. Im Schritt S102 wird die Person 40 mittels der identification engine 111 identifiziert. Dabei kann der Detailgrad der Identifizierung auch variieren und entweder die Person 40 konkret eindeutig identifiziert werden oder aber auch nur einer Personen-Gruppe zugeordnet werden. Im Schritt S102 wird dabei eine Identifizierungsinformation auf Basis der detektierten Präsenzinformation der Person 40 und/oder auf Basis zumindest einer weiteren personenbezogenen Information generiert.

Im Schritt S103 wird die interaction detection engine 115 mittels der Wakeup engine 116 aktiviert. Nach jener Aktivierung kann eine aktive, bevorzugt kontaktlose, Eingabe durch die Person 40 über ihre Absicht der Interaktion erfolgen und durch die interaction detection engine 115 bzw. die intent engine 112 empfangen werden.

Im Schritt S105a findet sodann eine Überprüfung statt, ob die Eingabe erkannt wurde. Sollte die Eingabe der Person 40 erkannt worden sein und ist demnach die entsprechende Absichtsinformation verarbeitbar, so findet im Schritt S106 jenes Verarbeiten statt. Dann kann etwa in der Speicherverwaltungseinheit 20 die gewünschte Buchung vorgenommen und etwa die Anwesenheitsinformation geändert bzw. hinterlegt werden. Sollte die Prüfung ergeben, dass die Eingabe der Person 40 nicht erkannt wurde bzw. der entsprechende Buchungsvorgang nicht möglich ist, dann wird gemäß schritt S105b die Person 40 zur erneuten Eingabe ausgefordert.

Die generierte Identifizierungsinformation und die empfangene Absichtsinformation werden also mit vorgegebenen Informationen (Buchungsinformationen) abgeglichen. Hierzu interagiert die Steuereinheit 11 des Anwesenheitserfassungs-Terminals 10 wie zuvor beschrieben mit der Speicherverwaltungseinheit 20. Die Anwesenheitsinformation der Person 40 kann bei erfolgreichem Abgleich in der Speicherverwaltungseinheit 20 verarbeitet und automatisch gespeichert werden. Die Anwesenheitsinformation kann beispielsweise sein, dass die Person 40 nun zur Arbeit erschienen ist und die Zeiterfassung der Arbeit beginnt. Insofern kann das Anwesenheitserfassungs-Terminal 10 ein Zeiterfassungs-Terminal darstellen.

Die im Rahmen des vorschlagsgemäßen und dargestellten Anwesenheitserfassungs-Terminal 10 beschriebenen Merkmale und Vorteile sind entsprechend auf das vorschlagsgemäße computerimplementierte Verfahren zum Betreiben eines Anwesenheitserfassungs-Terminals übertragbar. Konkret ist das computerimplementierte Verfahren zum Betreiben jenes vorschlagsgemäßen und beschriebenen Anwesenheitserfassungs-Terminals 10 eingerichtet. Das vorschlagsgemäße und hier beschriebene Anwesenheitserfassungs-Terminal 10 wiederum ist zur Ausführung des vorschlagsgemäßen computerimplementierten Verfahrens zum Betreiben eines Anwesenheitserfassungs-Terminals eingerichtet. Insofern wurden zuvor und werden nachfolgend die das Anwesenheitserfassungs-Terminal 10 bzw. das Verfahren zum Betreiben des Anwesenheitserfassungs-Terminals 10 charakterisierende Merkmale und spezifische Vorteile regelmäßig nur einfach beschrieben.

Vorschlagsgemäß kann in das Anwesenheitserfassungs-Terminal 10 auch eine weitere Kontrollebene integriert sein. Sodann wird der Person 40 ein Feedback über die erfolgte Buchung, also über die vorgenommene Abänderung der Anwesenheitsinformation in der Speicherverwaltungseinheit 20 oder eben auch darüber, dass keine Änderung vorgenommen wurde, eine Rückmeldung gegeben.

Vorteilhaft ist die Speicherverwaltungseinheit 20 dann derart eingerichtet, dass, wenn die Anwesenheitsinformation gespeichert worden ist, die Speicherverwaltungseinheit 20 in den Daten der Person 40 in ihrem Stammsatz der personenspezifischen Daten überprüft, ob ein Feedback zu der Interaktion der Person 40 mit dem Anwesenheitserfassungs-Terminal 10 gewünscht ist.

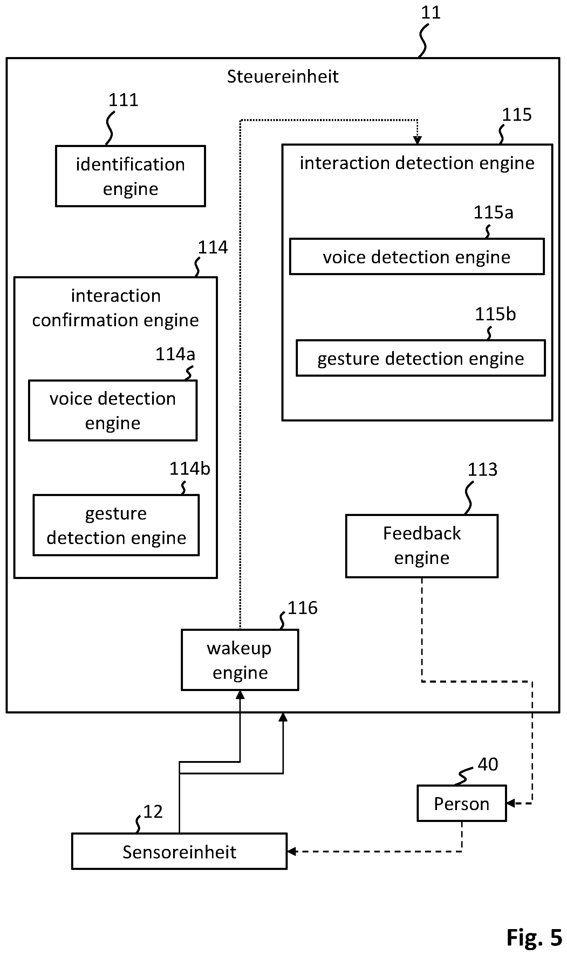

Das Anwesenheitserfassungs-Terminal 10 bzw. die Steuereinheit 11 kann dazu, wie etwa in Figur 5 dargestellt, zusätzlich zur identification engine 111 sowie interaction detection engine 115 (bzw. intent engine 112) auch eine Feedback engine 113 (Rückmeldungseinrichtung) aufweisen. Die Feedback engine 113 ist derart eingerichtet, dass, wenn die Interaktion der Person 40 mit dem Anwesenheitserfassungs-Terminal 10 erfolgt ist, eine Feedback-Information ausgegeben werden kann. Die Feedback-Information kann dabei am Anwesenheitserfassungs-Terminal 10, beispielsweise am Display dieses bzw. über Lautsprecher, oder aber auch an dem mobilen Zutrittsmedium der Person 40 ausgegeben werden. Dabei kann die Feedback-Information als Sprachsignal und/oder als grafisches Signal und/oder als haptisches Signal, wie beispielsweise einem Vibrationssignal am mobilen Zutrittsmedium, ausgegeben werden.

Die Feedback-Information kann beispielsweise auch eine Aufforderung oder eine Benutzerinformationen umfassen, mit der ein Unterhalter des Anwesenheitserfassungs-Terminals (z.B. Arbeitgeber) die Person 40, die als Benutzer mit dem Anwesenheitserfassungs-Terminal 10 interagiert, zu etwas auffordert oder diese über etwas informiert. Eine Aufforderung an die Person 40 könnte etwa lauten: "bei Personalabteilung melden", "bitte Überstunden reduzieren" etc.. Eine simple Information könnte etwa über den aktuellen Zeitkontostand erfolgen.

Es kann vorteilhaft vorgesehen sein, dass sensible personenspezifische Informationen nur auf dem mobilen Endgerät der Person 40 ausgeben werden, während allgemeine und nicht sensible Informationen nur auf dem Anwesenheitserfassungs-Terminal 10 oder auf dem Anwesenheitserfassungs-Terminal 10 sowie dem mobilen Endgerät ausgeben werden.

Die Feedback engine 113 kann zumindest teilweise als Software in dem Anwesenheitserfassungs-Terminal 10 bzw. in der Steuereinheit 11 realisiert sein, über welche Software zum einen mithilfe der Speicherverwaltungseinheit 20 überprüft werden kann, ob die Person 40 ein Feedback wünscht und, zum anderen, das entsprechende Feedback veranlasst werden kann. Dementsprechend kann die Feedback engine 113 bzw. die Steuereinheit 11 in Kommunikationsverbindung mit einer Sprachausgabeeinheit stehen, falls etwa ein Sprachsignal als Feedback-Information gewünscht ist.

Besonders vorteilhaft wird im Stammsatz der personenspezifischen Daten zuvor kontrolliert, ob die konkrete Person 40, die die Interaktion durchführt und zuvor identifiziert wurde, überhaupt ein Feedback wünscht, bzw. falls ja, in welcher Form das Feedback gewünscht ist. Die Feedback engine 113 kann demnach derart eingerichtet sein, dass eine personenabhängige Feedback-Information ausgegeben werden kann. So kann etwa ein Sprachsignal in der jeweiligen Sprache der Person 40 ausgegeben werden. Ferner könnte beispielsweise bei einer Person 40 mit einer Hörbehinderung vorgesehen sein, dass diese Person 40 ein anderes Signal als Feedback-Information, etwa das angesprochene grafische oder haptische Signal erhält.

Um die Sicherheit einer korrekten Interaktion zwischen der Person 40 und dem Anwesenheitserfassungs-Terminal 10 zu erhöhen, ist in dem Ausführungsbeispiel der Figur 5 ferner eine interaction confirmation engine 114 (Interaktionsbestätigungseinrichtung) in dem Anwesenheitserfassungs-Terminal 10 bzw. der Steuereinheit 11 vorgesehen.

Die interaction confirmation engine 114 kann eine klarstellende Absichtsinformation empfangen. Die klarstellende Absichtsinformation ist dafür gedacht, die eigentlich bereits kommunizierte und empfangene Absicht der Interaktion der Person 40 mit dem Anwesenheitserfassungs-Terminal 10 zu verifizieren oder falsifizieren. Dabei ist vorteilhaft, wenn jene klarstellende Absichtsinformation eine weitere Buchungsinformation für die Steuereinheit 11 darstellt. Von dieser weiteren Buchungsinformation wird zusätzlich zu der Identifizierungsinformation sowie Absichtsinformation dann abhängig gemacht, ob die Buchung in der Speicherverwaltungseinheit 20 durchgeführt werden soll oder nicht.

Hierzu kann die interaction confirmation engine 114 zumindest teilweise als Software in dem Anwesenheitserfassungs-Terminal 10 bzw. in der Steuereinheit 11 realisiert sein, über welche Software entsprechende Signale bzw. Handlungen der Person 40 zur Bestätigung bzw. Verneinung der zuvor erfassten Absicht ausgewertet werden können.

Die interaction confirmation engine 114 kann als voice detection engine 114a (Spracherkennungseinrichtung) zur Erfassung einer Spracheingabe durch die Person 40 und/oder als gesture detection engine 114b (Gestenerkennungseinrichtung) zur Erfassung einer Gesteneingabe durch die Person 40 ausgebildet sein. Hierzu kann auf die Beschreibung der voice detection engine 115a bzw. gesture detection engine 115b zuvor verwiesen werden. Konkret kann eine klarstellende Absichtsinformation etwa drin bestehen, dass die Person 40 über ein Sprachsignal (etwa ein ausgesprochenes "ja") bestätigt, dass sie die erfasste Interaktion wünscht und diese ausgeführt werden soll. Auch kontaktgebundene klarstellende Absichtsinformationen sind denkbar, indem die Person 40 etwa eine Eingabe am Anwesenheitserfassungs-Terminal 10 oder auf ihrem mobilen Zutrittsmedium vornimmt. Weiterhin sind jedoch auch sprachsowie kontaktlose Bestätigungen durch die Person 40 denkbar, indem die Person 40 etwa eine bestimmte Geste, beispielsweise auch mit ihrem mobilen Zutrittsmedium, ausführt. Eine spezifische Bewegung des mobilen Zutrittsmediums kann etwa über RFID- oder UWB-Technik als klarstellende Absichtsinformation von der interaction confirmation engine 114 erkannt werden.

Vorteilhaft ist die interaction detection engine 115 ferner dazu eingerichtet, der empfangenen Absichtsinformation eine Entfernungsinformation zuzuordnen. Hierüber kann erkannt werden, aus welcher Entfernung das von der Person 40 eingegebene bzw. veranlasste Signal kommt. Ein Beispiel ist, dass die Absichtsinformation über ein Sprachsignal durch die Person 40 mitgeteilt wird und, beispielsweise über die Lautstärke des Signals, durch die interaction detection engine 115 erkannt wird, wie weit die Person 40 entfernt ist. Dann kann der Buchungsvorgang davon abhängig gemacht werden, dass die Entfernungsinformation einem vorgegebenen Wertebereich entspricht. Also kann eine Buchung verhindert werden, wenn die Person 40 noch zu weit vom Anwesenheitserfassungs-Terminal 10 entfernt ist. Zum Buchungsvorgang und dem dafür erforderlichen Abgleich der detektierten bzw. empfangenen Informationen mit hinterlegten Informationen kann die interaction detection engine 115 dann derart konfiguriert sein, dass die Absichtsinformation nur weiterverarbeitet bzw. ausgegeben wird, wenn die Entfernungsinformation dem vorgegebenen Wertebereich entspricht.

Vorteilhaft kann weiterhin der Person 40 ein Hinweis durch das Anwesenheitserfassungs-Terminal 10 gegeben werden, ab wann sich die Person 40 nahe genug am Anwesenheitserfassungs-Terminal 10 befindet und demnach eine Buchung möglich ist. So ist nach jenem Ausführungsbeispiel die Steuereinheit 11 derart eingerichtet, dass, wenn die detektierte Präsenzinformation der Person 40 einem vorgegebenen Wertebereich entspricht, eine Initiierungs-Information an die Person 40 zur Mitteilung, dass die Interaktion möglich ist, ausgegeben wird.

Die Initiierungs-Information kann ein Sprachsignal oder ein akustisches Signal, und/oder ein grafisches Signal, und/oder ein haptisches Signal, insbesondere ein Vibrationssignal, sein. Die Die Initiierungs-Information am Anwesenheitserfassungs-Terminal 10, etwa über einen Lautsprecher oder Display des Anwesenheitserfassungs-Terminals 10, oder aber auch an einem mobilen Zutrittsmedium der Person 40, wie etwa seinem mobilen Endgerät ausgegeben werden.

Wenn die Speicherverwaltungseinheit 20 wie bevorzugt einen Stammsatz personenspezifischer Daten umfasst, dann ist Speicherverwaltungseinheit 20 bevorzugt derart eingerichtet, dass, wenn die Initiierungs-Information an die Person 40 ausgegeben werden soll, die Speicherverwaltungseinheit 20 in den Daten der Person 40 überprüft, welcher Typ an Initiierungs-Information durch die Person 40 gewünscht ist. Auf diese Weise kann besonders vorteilhaft auf die individuellen Bedürfnisse oder Voraussetzungen der Person 40 eingegangen werden. So könnte eine Person 40 mit Sehbehinderung etwa bevorzugt ein akustisches Signal bzw. Sprachsignal als Initiierungs-Information ausgegeben bekommen und nicht etwa ein grafisches Signal, während es sich bei einer Person 40 mit einer Hörbehinderung genau umgekehrt verhält. Auch können sprachliche bzw. Text umfassende Signale als Initiierungs-Information individuell an die Person 40 angepasst in ihrer jeweiligen Sprache ausgegeben werden. Analog verhält es sich bei eventuellen Feedback-Informationen, die ebenso personenspezifisch ausgegeben werden können, da personenspezifisch Informationen im Stammsatz der Daten in der Speicherverwaltungseinheit 20 hinterlegt sind.

## Patentansprüche

1. Anwesenheitserfassungs-Terminal (10), insbesondere Zeiterfassungs-Terminal, zur Erfassung einer Anwesenheitsinformation einer Person (40) auf Basis einer Aktion der Person (40), umfassend:
- eine Steuereinheit (11),
- eine Speicherverwaltungseinheit (20), wobei die Speicherverwaltungseinheit (20) zum Verarbeiten und Speichern der Anwesenheitsinformation der Person (40) eingerichtet ist,
- wenigstens eine Sensoreinheit (12), wobei die Sensoreinheit (12) zur Beobachtung einer Umgebungszone (30) und zur Ausgabe einer aus der Beobachtung der Umgebungszone (30) detektierten Präsenzinformation der Person (40) eingerichtet ist,
- eine identification engine (111), wobei die identification engine (111) zur Identifizierung der Person (40) und zur Ausgabe einer Identifizierungsinformation eingerichtet ist, wobei die Identifizierung der Person (40) auf Basis der detektierten Präsenzinformation der Person (40) und/oder auf Basis zumindest einer weiteren personenbezogenen Information erfolgen kann,
- eine interaction detection engine (115), wobei die interaction detection engine (115) zum Empfangen einer eine Absicht einer Interaktion der Person (40) mit dem Anwesenheitserfassungs-Terminal (10) repräsentierenden Absichtsinformation eingerichtet ist, und
- eine Wakeup engine (116), wobei die Wakeup engine (116) zum Aktivieren der interaction detection engine (115) zum Ermöglichen der Interaktion der Person (40) mit dem Anwesenheitserfassungs-Terminal (10) eingerichtet ist.

2. Anwesenheitserfassungs-Terminal nach Anspruch 1, wobei die interaction detection engine (115) als voice detection engine (115a) zur Erfassung einer Spracheingabe durch die Person (40) und/oder als gesture detection engine (115b) zur Erfassung einer Gesteneingabe durch die Person (40) ausgebildet ist.

3. Anwesenheitserfassungs-Terminal nach Anspruch 1 oder 2, wobei die interaction detection engine (115) ferner dazu eingerichtet ist, der empfangenen Absichtsinformation eine Entfernungsinformation zuzuordnen,
wobei, insbesondere, die interaction detection engine (115) derart konfiguriert ist, dass die Absichtsinformation nur ausgegeben wird, wenn die Entfernungsinformation einem vorgegebenen Wertebereich entspricht.

4. Anwesenheitserfassungs-Terminal nach einem der Ansprüche 1 bis 3, wobei ferner die Steuereinheit (11) derart eingerichtet ist, dass, wenn die detektierte Präsenzinformation der Person (40) einem vorgegebenen Wertebereich entspricht, eine Initiierungs-Information an die Person (40) zur Mitteilung, dass die Interaktion möglich ist, ausgegeben wird, wobei, insbesondere, die Initiierungs-Information wie folgt ausgebildet ist:
- ein Sprachsignal oder ein akustisches Signal, und/oder
- ein grafisches Signal, und/oder
- ein haptisches Signal, insbesondere ein Vibrationssignal,
wobei die Initiierungs-Information am Anwesenheitserfassungs-Terminal (10) und/oder an einem mobilen Zutrittsmedium der Person (40) ausgegeben wird.

5. Anwesenheitserfassungs-Terminal nach Anspruch 4, wobei die Speicherverwaltungseinheit (20) einen Stammsatz personenspezifischer Daten umfasst, wobei die Speicherverwaltungseinheit (20) derart eingerichtet ist, dass, wenn eine Initiierungs-Information an die Person (40) ausgegeben werden soll, die Speicherverwaltungseinheit (20) in den Daten der Person (40) überprüft, welcher Typ an Initiierungs-Information durch die Person (40) gewünscht ist.

6. Anwesenheitserfassungs-Terminal nach einem der Ansprüche 1 bis 5, wobei die Beobachtungszone (30) in eine Mehrzahl an Unterzonen aufgeteilt ist, wobei, vorzugsweise, die Mehrzahl an Unterzonen zumindest folgende Unterzonen umfasst:
- eine Nahzone (31), sowie
- eine Fernzone (32),
wobei die Nahzone (31) näher an dem Anwesenheitserfassungs-Terminal (10) angeordnet ist als die Fernzone (32),
wobei, insbesondere, die Sensoreinheit (12) eine spezifische detektierte Präsenzinformation der Person (40) in Abhängigkeit von einem zonenspezifischen Signal ausgibt, wobei das zonenspezifische Signal durch die Person (40) in der Unterzone ausgelöst wird.

7. Anwesenheitserfassungs-Terminal nach Anspruch 6, wobei die spezifische detektierte Präsenzinformation der Person (40) eine Information über folgende Umstände umfasst:
- in welcher Unterzone sich die Person (40) befindet, und/oder
- in welche Unterzone sich die Person (40) begibt, und/oder
- wie ein Bewegungsmuster der Person (40) aussieht, insbesondere wie eine Bewegungsrichtung der Person (40) und/oder eine Bewegungsgeschwindigkeit der Person (40) ist.

8. Anwesenheitserfassungs-Terminal nach Anspruch 6 oder 7, wobei die Wakeup engine (116) derart eingerichtet ist, dass sie die interaction detection engine (115), eine voice detection engine (115a), eine gesture detection engine (115b), die identification engine (111), und/oder eine Feedback engine (113), insbesondere in Abhängigkeit von der spezifischen detektierten Präsenzinformation der Person (40), aktivieren kann, wobei, vorzugsweise, die Wakeup engine (116) ferner zum Deaktivieren der interaction detection engine (115), einer voice detection engine (115a), einer gesture detection engine (115b), der identification engine (111), und/oder einer Feedback engine (113), vorzugsweise in Abhängigkeit von der spezifischen detektierten Präsenzinformation der Person (40), eingerichtet ist.

9. Anwesenheitserfassungs-Terminal nach einem der Ansprüche 6 bis 8, wobei die identification engine (111) derart eingerichtet ist, dass sie erst aktiviert wird, wenn die Person (40) die Umgebungszone (30), insbesondere die Fernzone (32), betritt,
und/oder
wobei die interaction detection engine (111) derart eingerichtet ist, dass sie erst aktiviert wird, wenn die Person (40) die Umgebungszone (30), insbesondere die Nahzone (31), betritt.

10. Anwesenheitserfassungs-Terminal nach einem der Ansprüche 6 bis 9, wobei eine Aktivierung und/oder Deaktivierung der identification engine (111), der voice detection engine (115a), der gesture detection engine (115b), der identification engine (111), und/oder der Feedback engine (113) in Abhängigkeit von einem Bewegungsmuster der Person (40), insbesondere von einer Bewegungsrichtung der Person (40) und/oder einer Bewegungsgeschwindigkeit der Person (40), erfolgt.

11. Anwesenheitserfassungs-Terminal nach einem der Ansprüche 1 bis 10, wobei die identification engine (111) ferner zur Verifizierung der Person (40) und zur Ausgabe einer Verifizierungsinformation eingerichtet ist, wobei die Verifizierung der Person (40) auf Basis der detektierten Präsenzinformation der Person (40) und/oder auf Basis der weiteren personenbezogenen Information erfolgt,
wobei, insbesondere, die identification engine (111) wenigstens eine Anti-Spoofing engine (lila) zur Differenzierung zwischen einer realen Person und einem Foto einer Person umfasst.

12. Anwesenheitserfassungs-Terminal nach einem der Ansprüche 1 bis 11, wobei die Sensoreinheit (12) wenigstens eine der folgenden Einheiten umfasst:
- wenigstens eine Kamera (121),
- wenigstens einen biometrischen Sensor (122),
- wenigstens einen Annäherungssensor (123), und/oder
- wenigstens eine mobile access engine (124), wobei die mobile access engine (124) der Sensoreinheit (12) so konfiguriert ist, dass, zum Detektieren der Präsenzinformation der Person (40), ein Kommunikationsaustausch zwischen der mobile access engine (124) und einem mobilen Zutrittsmedium der Person (40) stattfindet.

13. Anwesenheitserfassungs-Terminal nach einem der Ansprüche 1 bis 12, wobei die identification engine (111) wenigstens eine der folgenden Einheiten umfasst:
- wenigstens eine Kamera (111b),
- wenigstens einen biometrischen Sensor (111c), und/oder
- wenigstens eine mobile access engine (llld), wobei die mobile access engine (llld) der identification engine (111) so konfiguriert ist, dass, zur Identifizierung der Person (40), ein Kommunikationsaustausch zwischen der mobile access engine (llld) und einem mobilen Zutrittsmedium der Person (40) stattfindet.

14. Anwesenheitserfassungs-Terminal nach Anspruch 12 oder 13, wobei das mobile Zutrittsmedium der Person (40) als Zutrittskarte, Badge und/oder mobiles Endgerät ausgebildet ist.

15. Anwesenheitserfassungs-Terminal nach einem der Ansprüche 1 bis 14, wobei ferner eine Feedback engine (113) vorgesehen ist, wobei die Feedback engine (113) derart eingerichtet ist, dass, wenn die Interaktion der Person (40) mit dem Anwesenheitserfassungs-Terminal (10) erfolgt ist, eine Feedback-Information ausgegeben werden kann,
wobei, insbesondere, die Feedback-Information wie folgt ausgebildet ist:
- ein Sprachsignal, und/oder
- ein grafisches Signal, und/oder
- ein haptisches Signal, insbesondere ein Vibrationssignal,
wobei die Feedback-Information am Anwesenheitserfassungs-Terminal (10) und/oder an dem mobilen Zutrittsmedium der Person (40) ausgegeben wird.

16. Anwesenheitserfassungs-Terminal nach Anspruch 15, wobei die Speicherverwaltungseinheit (20) einen/den Stammsatz personenspezifischer Daten umfasst, wobei die Speicherverwaltungseinheit (20) derart eingerichtet ist, dass, wenn die Anwesenheitsinformation gespeichert worden ist, die Speicherverwaltungseinheit (20) in den Daten der Person (40) überprüft, ob ein Feedback zu der Interaktion der Person (40) mit dem Anwesenheitserfassungs-Terminal (10) gewünscht ist.

17. Computerimplementiertes Verfahren zum Betreiben eines Anwesenheitserfassungs-Terminals (10), insbesondere Zeiterfassungs-Terminal, zur Erfassung einer Anwesenheitsinformation einer Person (40) auf Basis einer Aktion der Person (40), umfassend die Schritte:
- Detektieren einer Präsenzinformation der Person (40), wobei eine detektierte Präsenzinformation mittels Beobachtens einer Umgebungszone (30) mit wenigstens einer Sensoreinheit (12) generiert wird,
- Identifizieren der Person (40) durch eine identification engine (111), wobei eine Identifizierungsinformation auf Basis der detektierten Präsenzinformation der Person (40) und/oder auf Basis zumindest einer weiteren personenbezogenen Information generiert wird,
- Aktivieren einer interaction detection engine (115) zur Erfassung einer Eingabe der Person (40), welche Eingabe eine Absicht einer Interaktion der Person (40) mit dem Anwesenheitserfassungs-Terminal (10) repräsentiert,
- Verarbeiten der Eingabe der Person (40) und gegebenenfalls Speichern einer Anwesenheitsinformation der Person (40) in einer Speicherverwaltungseinheit (20).

18. Computerimplementiertes Verfahren nach Anspruch 17, wobei das Verarbeiten der Eingabe der Person (40) derart durchgeführt wird, dass, in Abhängigkeit davon, ob die Eingabe erkannt wird oder nicht erkannt wird, entweder die Absicht der Interaktion der Person (40) umgesetzt wird oder eine Ausgabe einer Aufforderung an die Person (40) erfolgt, eine erneute Eingabe vorzunehmen.

19. Computerprogramm, umfassend Befehle, die bei der Ausführung des Programms durch einen Prozessor eines Anwesenheitserfassungs-Terminals (10) das Anwesenheitserfassungs-Terminal (10) veranlassen, die Schritte des Verfahrens nach Anspruch 17 oder 18 auszuführen.
